# EUROPÄISCHE PATENTSCHRIFT

(11) **EP 2 533 035 B1**
(45) Veröffentlichungstag und Bekanntmachung des Hinweises auf die Patenterteilung: **20.12.2017**
(21) Anmeldenummer: 12003922.7
(22) Anmeldetag: 18.05.2012
(51) Int. Cl.: G01N 27/02, D06F 39/00

(54) **Vorrichtung und Verfahren zur Erfassung von Materialeigenschaften**
Method and device for detecting material properties
Dispositif et procédé de détection des caractéristiques de matériaux

(30) Priorität: 06.06.2011 DE 202011101482 U
(43) Veröffentlichungstag der Anmeldung: 12.12.2012
(73) Patentinhaber: Seuffer GmbH & Co. KG, 75365 Calw (DE)
(72) Erfinder: Gruden, Roman, 75365 Calw (DE); Beck, Volker, 75365 Calw (DE); Tröltzsch, Uwe, 09126 Chemnitz (DE); Kanoun, Olfa, 09126 Chemnitz (DE)
(74) Vertreter: Winter, Brandl, Fürniss, Hübner, Röss, Kaiser, Polte - Partnerschaft mbB

(56) Entgegenhaltungen:
- US-A1- 2004 257 094
- US-A1- 2005 179 449
- US-A1- 2005 184 734
- US-A1- 2009 119 041

## Beschreibung

Die vorliegende Erfindung umfasst eine Vorrichtung zur Erfassung von Materialeigenschaften, und insbesondere eine Vorrichtung zur Erfassung von Eigenschaften fluider Medien, sowie ein Verfahren zur Erfassung von Materialeigenschaften des Mediums auf der Basis einer für das Medium zuvor erfassten Grund-Impedanzkennlinie.

Aus der Druckschrift DE 196 11 174 C1 ist ein Messwertaufnehmer zur elektrodenlosen Leitfähigkeitsmessung von wässrigen Lösungen bekannt, bei dem drei Transformatoren verwendet werden. Ein erster Transformator steht in Verbindung mit einer Messflüssigkeit und transformiert eine Generatorwechselspannung in ein Magnetfeld, wobei die Messflüssigkeit von dem durch den ersten Transformator mit der Generatorwechselspannung erzeugten Magnetfeld durchdrungen wird. Es sind ferner ein zweiter und ein dritter Transformator vorgesehen, die beide über das in der Flüssigkeit vorhandene Magnetfeld mit dem ersten Transformator verkoppelt sind. Jeder der beiden weiteren Transformatoren mit der Funktion als Ausgangstransformator wird auf eine unterschiedliche Resonanzfrequenz abgeglichen, sodass die beiden Resonanzfrequenzen gegeneinander versetzt sind. Die Addition der beiden Ausgangsspannungen ergibt einen breitbandigen Frequenzgang unter dem Materialeinfluss der Messflüssigkeit. Die Ausgangssignale der beiden weiteren Transformatoren werden ausgewertet zur Bestimmung der Leitfähigkeit der Messflüssigkeit in Form einer wässrigen Lösung, wobei mittels einer entsprechenden Schaltungsanordnung eingekoppelte Störsignale beseitigt werden.

Die Druckschrift DD 217 557 A1 offenbart ein Verfahren zur Regelung der Reinigungs- oder Spülmittelzugabe in Waschgeräten, wobei in einem Waschgerät zur physikalischchemischen Bestimmung der Eigenschaften der Waschlauge unterschiedliche Sensoren angeordnet sind. Über eine elektronische Schaltung, mittels der die Ausgangssignale der Sensoren ausgewertet werden, wird eine Änderung des Anstiegs als Messsignal während der Zugabe von Reinigungs- oder Spülmitteln erfasst und ausgewertet. Es kann hieraus die Waschmitteldosierung für das Waschgerät gesteuert werden.

Schließlich offenbart die Druckschrift DE 197 55 418 A1 ein Sensorelement sowie eine Vorrichtung zur Messung komplexer Impedanzen in Materialien, wobei das Sensorelement zwei aus einem leitfähigen Material bestehende Elektroden aufweist, die in einem vorbestimmten Abstand zueinander angeordnet sind. Die beiden Elektroden sind mit einer dünnen Isolierschicht überzogen, die eine im Vergleich zu dem vorbestimmten Abstand geringe Schichtdicke aufweist. Das gebildete Sensorelement ist gegenüber den Umgebungsmedien, deren Eigenschaften erfasst werden sollen, weitgehend unempfindlich. In einer Auswerteschaltung werden die Ausgangssignale der Sensoren einer weiteren Verarbeitung unterzogen, und es kann eine Analyse der Eigenschaften einer jeweils zwischen den Elektroden angeordneten Flüssigkeit durchgeführt werden. Insbesondere können komplexe Impedanzen als Maß für die Eigenschaften der Flüssigkeit bestimmt und ausgewertet werden.

Die Literaturstelle: Kurzweil / Fischle: 2004, "A new monitoring method for electrochemical aggregates by impedance spectroscopy"; Journal of Power Sources S. 331 - 340 zeigt ein mathematisches Modell, das zu einer Auswertung herangezogen werden kann.

Des Weiteren offenbart die Druckschrift US 2005/184734 A1 eine Erfassungseinrichtung zur Erfassung von Eigenschaften von Fluiden, wobei mittels einer Impedanzspektroskopie Kennlinien aufgezeichnet werden, entsprechend denen Eigenschaften des Fluids bestimmt werden können. Hierzu sind Elektroden in dem Fluid innerhalb eines Behälters angeordnet und werden mit elektrischen Wechselgrößen (Spannungen) angesteuert, wobei hinsichtlich der Frequenz der Wechselgrößen ein Durchlauf innerhalb eines vorbestimmten Frequenzbereichs möglich ist. Danach kann eine Strommessung durchgeführt werden, wobei der Wirkwiderstand und der Blindwiderstand für eine Vielzahl von Frequenzintervallen innerhalb des Frequenzbereichs ermittelt wird. Es wird hierzu eine spezielle Frequenz in diesem Bereich bestimmt in Verbindung mit einem Minimum des Blindwiderstands (Nyquist-Minimum). Danach erfolgt eine Wiederholung für unterschiedliche Temperaturen und Temperaturbereiche des Fluids. In Verbindung mit der erfassten Temperatur des Fluids erfolgt eine weitere Auswertung der über die Messung erhaltenen Kennlinien, wobei als Gesamtergebnis auf die Eigenschaften des Fluids (mit einer Temperaturabhängigkeit) geschlossen werden kann.

Entsprechend den vorstehend angegebenen bekannten Möglichkeiten zur Erfassung der Eigenschaften von beispielsweise einer Waschlauge oder sonstigen fluiden Medien können mit den dargestellten Vorrichtungen und einer vergleichsweise komplizierten Auswertung von Messergebnissen Parameter der Eigenschaften der zu untersuchenden Medien bestimmt werden. Insbesondere besteht allgemein ein großer Bedarf an der Erfassung von Materialeigenschaften wie beispielsweise einer Ölqualität in einer Brennkraftmaschine, um gezielte einen Ölwechsel bei verschlechterten Eigenschaften des verwendeten Öls vorzunehmen. Es kann ebenfalls eine Bremsflüssigkeit in Kraftfahrzeugen oder ein allgemeines Hydrauliköl hinsichtlich seiner im Betrieb veränderlicher Eigenschaften überprüft werden.

Auch ist es im Hinblick auf das Erfordernis des Einsparens von Wasch- und Reinigungsmitteln und eines umweltbewussten Waschens wichtig, eine Waschmittelmenge in Abhängigkeit von dem Verschmutzungsgrad zu reinigender Wäsche zu dosieren, wobei die Waschlauge zu überprüfen ist. Eine gezielte und richtige Waschmitteldosierung führt einerseits zu einer Einsparung an Energie und Wasser, sowie andererseits zu einer geringeren Belastung des Abwassers. In diesem Zusammenhang sollte eine Einrichtung zur Erfassung beispielsweise einer Waschlauge hinsichtlich ihrer Waschmittelkonzentration oder eines Verschmutzungsgrads einfach aufgebaut und sicher im Betrieb ausgeführt sein. Im Idealfall sollte jedes Waschgerät mit einer derartigen Einrichtung ausgerüstet werden, so dass auch die Erfordernisse eines einfachen und kostengünstigen Aufbaus sowie einer unkomplizierten Montage zu berücksichtigen sind.

Der vorliegenden Erfindung liegt daher die Aufgabe zugrunde, eine Vorrichtung und ein Verfahren zur Erfassung von Materialeigenschaften, insbesondere von fluiden Medien, derart auszugestalten, dass auf einfache Weise mit einem verminderten Aufwand eine kontinuierliche Messung der Materialeigenschaften möglich ist, so dass bei einer guten Genauigkeit der Messung gleichzeitig der Aufwand der Datenerfassung und Datenauswertung erheblich vermindert ist.

Erfindungsgemäß wird diese Aufgabe mit den in den Patentansprüchen angegebenen Merkmalen hinsichtlich einer Vorrichtung und eines Verfahrens zur Erfassung von Materialeigenschaften gelöst.

Die vorliegende Erfindung betrifft somit eine Vorrichtung zur Erfassung von Materialeigenschaften eines Mediums, mit einer Messeinrichtung einschließlich einer Sensoreinrichtung, die mit dem Medium in Verbindung steht, und einer Ansteuerungseinrichtung zur Ansteuerung der Sensoreinrichtung mit Signalen eines vorbestimmten Frequenzbereichs, und einer Steuerungseinrichtung zur Steuerung des Betriebs der Messeinrichtung und Vorgabe des vorbestimmten Frequenzbereichs, wobei die Ansteuerungseinrichtung vorgesehen ist zur Bestimmung des Verlaufs der komplexen Impedanz Z und der entsprechenden Komponenten (Realteil Re(Z) und Imaginärteil Im(Z)) der komplexen Impedanz des Mediums entsprechend dem vorbestimmten Frequenzbereich in Abhängigkeit von der Frequenz, und zur Ausgabe einer Grund-Impedanzkennlinie einschließlich einer Mehrzahl charakteristischer Punkte, und die Steuerungseinrichtung vorgesehen ist zur Auswertung der Grund-Impedanzkennlinie. Die Steuerungsvorrichtung ist ferner vorgesehen zum Bestimmen eines jeweiligen Umgebungs-Frequenzbereichs der Grund-Impedanzkennlinie um einen jeweiligen der charakteristischen Punkte, Wiederholen des vorherigen Bestimmungsschritts für zumindest eine vorbestimmte Anzahl der Mehrzahl der charakteristischen Punkte der Grund-Impedanzkennlinie, Bestimmen der Frequenz der Lage eines jeweiligen charakteristischen Punkts durch eine aktuelle Messung in jedem Umgebungs-Frequenzbereich, und Bestimmen der Eigenschaften des Mediums aus der Frequenz der Lage der jeweiligen charakteristischen Punkte aus der aktuellen Messung in Verbindung mit zuvor gespeicherten Bezugswerten und Erzeugen eines Ergebnissignals bezüglich der Eigenschaften des Mediums. Auf der Basis der vorab definierten Grund-Impedanzkennlinie für ein bestimmtes Medium sind die charakteristischen Punkte in Form von diskreten Messpunkten innerhalb des Frequenzbereichs vorgesehen, und gemäß der Lage der charakteristischen Punkte werden die jeweiligen Umgebungs-Frequenzbereiche um diese Punkte definiert als ein vorbestimmter Frequenzbereich kleiner und größer als die Frequenz des charakteristischen Punkts der Grund-Impedanzkennlinie.

Neben der Darstellung der Impedanz Z kann auch für eine Aussage über die Eigenschaften des Mediums die komplexe Admittanz (Kehrwert der komplexen Impedanz Z) herangezogen werden. Die sich ergebenden unterschiedlichen Darstellungen von Erfassungsergebnissen können applikationsabhängig gewählt werden, d. h. in Abhängigkeit von der Art der Messung und dem zu untersuchenden Medium sowie auch hinsichtlich der zu erwartenden Veränderungen der Eigenschaften des Mediums während einer überwachten Anwendung des Mediums.

Mit der erfindungsgemäßen Lösung ist es möglich, unterschiedliche Eigenschaften in fluiden Medien, wie beispielsweise eine Waschmittelkonzentration in einem Wasser, oder Verschmutzungen in einem Öl zu erfassen, sodass seitens des Verbrauchers direkt oder mittels eines entsprechenden Automatismus geeignete und optimierte Maßnahmen ergriffen werden können, um umweltschonend und energiesparend vorzugehen und gleichzeitig ein optimales Reinigungsergebnis zu erzielen. Die erfindungsgemäße Vorrichtung zur Erfassung von Materialeigenschaften arbeitet somit auf der Basis der Impedanzspektroskopie, wobei in der entsprechenden Weise die Sensoreinrichtung in Verbindung mit einem vorbestimmten Frequenzbereich (der jeweiligen elektrischen Signale) angesteuert wird. Die speziell erfassten diskreten Messpunkte zu vorbestimmten Frequenzen innerhalb des Frequenzbereichs, die auch als charakteristische oder besondere Punkte bezeichnet werden, sind für die Materialeigenschaften des untersuchten Mediums bezeichnend und charakteristisch, so dass daraus eindeutig und schnell auf die interessierenden Materialeigenschaften (vorbestimmte Parameter) geschlossen werden kann.

Die Vorrichtung zur Erfassung von Materialeigenschaften gemäß der vorliegenden Erfindung ermöglicht somit eine genaue und auch eine kontinuierliche Erfassung der Materialeigenschaften auf einfache Weise, wobei die Sensoreinrichtung dem Medium ausgesetzt ist und die Erfassung mittels einer entsprechenden Ansteuerung über eine Steuerungseinrichtung durchgeführt wird. Die Erfassungsergebnisse können in der Steuerungseinrichtung in Verbindung mit gespeicherten Grunddaten vergleichsweise schnell ausgewertet werden, sodass dem Benutzer schnell eine gewünschte Information zur Verfügung steht oder die Information gezielt weiteren Steuerungs- oder Regelungseinheiten oder Stellorganen, beispielsweise zur Dosierung von Waschmitteln oder Wasser, zugeführt werden kann. Die Auswertung im Einzelnen kann auf die charakteristischen Punkte beschränkt werden, so dass die erforderliche Auswertungszeit verkürzt werden kann. Neben der reinen Informationsgewinnung besteht somit die Möglichkeit, auf einfache Weise die Betriebsparameter der zu erfassenden Medien zu steuern, beispielsweise wann ein verbrauchtes Motorenöl auszuwechseln ist, oder ob eine Waschlauge noch eine weitere Waschmittelzugabe benötigt. Insofern führt die Anwendung der erfindungsgemäßen Vorrichtung zur Erfassung von Materialeigenschaften zu teilweise erheblichen Einsparungen und einer umweltgerechten Verwendung von Rohstoffen und Energie.

Die Anwendung der erfindungsgemäßen Vorrichtung ermöglicht ebenfalls das Ermitteln der Daten auf einfache Weise und mit einer erheblichen Verminderung der Datenmenge gegenüber bekannten Auswertungen, beispielsweise von Kennlinienauswertungen. Es besteht die Möglichkeit, mit der vorstehend angegebenen Vorrichtung die Verarbeitung von Daten auf einzelne Bereiche einer Kennlinie zu beschränken, um zu einer gesamten Aussage hinsichtlich der Eigenschaften des untersuchten Mediums zu gelangen. Insbesondere kann mit der schnellen und vereinfachten Erfassung in einem automatisierten System auch eine Steuerung oder Regelung durchgeführt werden, bei der beispielsweise eine zum Einsatz gelangende Menge eines Rohstoffes genau bestimmt und damit dosiert werden kann.

Die vorliegende Erfindung betrifft ebenfalls ein Verfahren zur Erfassung von Materialeigenschaften eines Mediums auf der Basis einer für das Medium zuvor in einem vorbestimmten Frequenzbereich erfassten Grund-Impedanzkennlinie einschließlich einer Mehrzahl charakteristischer Punkte. Das Verfahren umfasst die Schritte: Bestimmen eines jeweiligen Umgebungs-Frequenzbereichs der Grund-Impedanzkennlinie um einen jeweiligen der charakteristischen Punkte, Wiederholen des vorherigen Bestimmungsschritts für zumindest eine vorbestimmte Anzahl der Mehrzahl der charakteristischen Punkte der Grund-Impedanzkennlinie, Bestimmen der Frequenz der Lage eines jeweiligen charakteristischen Punkts durch eine aktuelle Messung in jedem Umgebungs-Frequenzbereich, und Bestimmen der Eigenschaften des Mediums aus der Frequenz der Lage der jeweiligen charakteristischen Punkte aus der aktuellen Messung in Verbindung mit zuvor gespeicherten Bezugswerten und Erzeugen eines Ergebnissignals bezüglich der Eigenschaften des Mediums.

Auf der Basis der vorab definierten Grund-Impedanzkennlinie für ein bestimmtes Medium sind die charakteristischen Punkte in Form von diskreten Messpunkten innerhalb des Frequenzbereichs vorgesehen, und gemäß der Lage der charakteristischen Punkte werden die jeweiligen Umgebungs-Frequenzbereiche um diese Punkte definiert als ein vorbestimmter Frequenzbereich kleiner und größer als die Frequenz des charakteristischen Punkts der Grund-Impedanzkennlinie. Innerhalb der Umgebungs-Frequenzbereiche wird die aktuelle Messung durchgeführt, wobei mit dieser Messung eine neue Lage (Frequenzwert) des betreffenden charakteristischen Punkts bestimmt wird. Aus der durch eine Frequenzinformation bestimmten neuen Lage des betreffenden charakteristischen Punkts des zugehörigen Umgebungs-Frequenzbereichs wird relativ zur ursprünglichen Lage eine Information (Ergebnissignal) zu den Eigenschaften des Mediums gewonnen.

Mit der einmaligen Messung der Grund-Impedanzkennlinie und dem späteren Messen lediglich innerhalb der Umgebungs-Frequenzbereiche um die charakteristischen Punkte kann der Aufwand zur Auswertung des Messergebnisses erheblich vermindert werden, so dass auch außerhalb eines Laborbetriebs in handelsüblichen Geräten die Vorrichtung in Verbindung mit dem zugehörigen Verfahren eingesetzt werden kann.

Weitere Ausgestaltungen der Erfindung sind in den Unteransprüchen angegeben.

Bei der Vorrichtung kann die Sensoreinrichtung Kondensatorplatten aufweisen, zwischen denen sich ein Teil des Mediums befindet, und es kann die Sensoreinrichtung vorgesehen sein zur Erfassung der komplexen Impedanz Z des Mediums in dem vorbestimmten Frequenzbereich.

Das Medium kann in einem Prozessablauf verwendet werden, und die Steuerungseinrichtung kann vorgesehen sein, das Ergebnissignal zur Beeinflussung des Prozessablaufs einer externen, an die Steuerungseinrichtung anschließbaren Steuereinheit zuzuführen.

Die Ansteuerungseinrichtung kann vorgesehen sein, ein Spannungssignal mit dem vorbestimmten Frequenzbereich an die Sensoreinrichtung anzulegen, wobei der Sensoreinrichtung Wechselspannungssignale in dem Frequenzbereich zugeführt werden.

Die Steuerungsvorrichtung kann einen ersten Block aufweisen, der vorgesehen ist zur Bestimmung von Einzelfrequenzen, denen die jeweiligen charakteristischen Punkte des Impedanzverlaufs zugeordnet sind.

Die Steuerungseinrichtung kann einen zweiten Block aufweisen, der vorgesehen ist zur Verarbeitung der jeweiligen Impedanz der charakteristischen Punkte und Erzeugen des Ergebnissignals.

Der zweite Block der Steuerungseinrichtung kann ferner vorgesehen sein zur Verarbeitung lediglich der Impedanzen der charakteristischen Punkte und zur Zuordnung von jeweiligen Materialeigenschaften des Mediums zu den charakteristischen Punkten.

Der zweite Block der Steuerungseinrichtung kann ferner vorgesehen sein, die Zuordnung von jeweiligen Materialeigenschaften des Mediums zu den charakteristischen Punkten in Abhängigkeit von zuvor gespeicherten Bezugswerten vorzunehmen.

Die Kondensatorplatten der Sensoreinrichtung können paarweise vorgesehen sein und aus einem leitenden Material bestehen, und wobei zumindest zwei Plattenpaare vorgesehen sein können, von denen ein Plattenpaar Kondensatorplatten aufweist, die mit einer Isolierschicht versehen sind.

Es kann das Bestimmen der Lage der jeweiligen charakteristischen Punkte mit einer aktuellen Messung mittels eines Algorithmus erfolgen.

Die Grund-Impedanzkennlinie wird über den gesamten Frequenzbereich ermittelt und als Referenz-Information abgespeichert, und es können die Eigenschaften des betreffenden Mediums aus einem Vergleich der aktuell gemessenen Werte innerhalb der Umgebungs-Frequenzbereiche um die jeweiligen charakteristischen Punkte mit den gespeicherten Werten bestimmt werden.

Die Erfindung wird nachstehend anhand von Ausführungsbeispielen unter Bezugnahme auf die Zeichnungen näher beschrieben. Es zeigen:
Figur 1 ein Blockschaltbild einer Schaltungsanordnung zur Durchführung einer Impedanzspektroskopie,
Figur 2 eine vereinfachte schematische Darstellung der Schaltungsanordnung gemäß Figur 1, die beispielsweise in einem Gerät angeordnet ist,
Figur 3 ermittelte Impedanzkennlinien in Abhängigkeit von der Frequenz aufgeteilt nach einem Realteil Re(Z) und einem Imaginärteil Im(Z) der komplexen Impedanz,
Figur 4 eine Kennlinie der Impedanz Z mit der Darstellung des Imaginärteils über dem Realteil,
Figur 5 eine schematische Darstellung eines Ersatzschaltbildes der Sensoreinrichtung einschließlich des Einflusses des zu erfassenden Mediums sowie die Angabe der entsprechenden physikalischen Größen,
Figur 6 ein schematisches Blockschaltbild des Aufbaus der Steuerungseinrichtung mit entsprechenden Funktionen, und
Figur 7 schematische Darstellungen des Aufbaus der Sensoreinrichtung mit einem Elektrodenpaar (Figur 7A) und zwei Elektrodenpaaren (Figur 7B).

### Beschreibung bevorzugter Ausführungsbeispiele

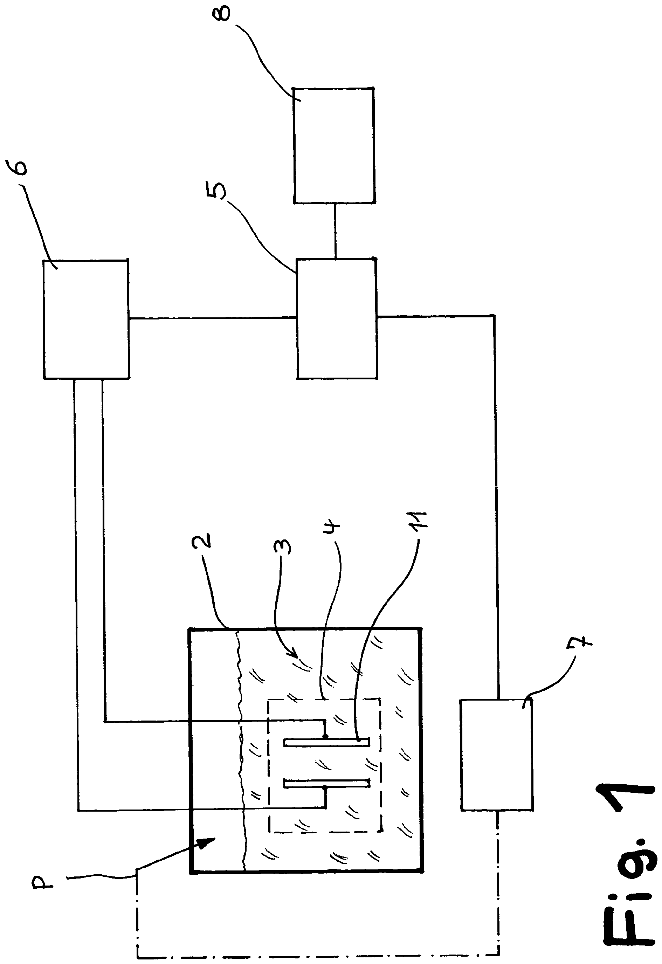

Nachstehend werden anhand des in Figur 1 gezeigten schematischen Blockschaltbildes der Aufbau und die Wirkungsweise der vorliegenden Erfindung beschrieben.

Figur 1 zeigt die Vorrichtung 1 zur Erfassung von Materialeigenschaften (nachstehend vereinfacht als "die Vorrichtung 1" bezeichnet) zur Erfassung eines in einem Behälter 2 angeordneten Mediums 3. Hierbei ist der Begriff Behälter in sehr allgemeiner Form aufzufassen, wobei es sich beispielsweise um einen Tank in einer Maschine, eine Trommel einer Waschmaschine oder die Ölwanne in einem Kraftfahrzeug handeln kann. Die vorliegende Erfindung ist nicht auf eine dieser Behälterarten beschränkt. In jedem Fall beinhaltet der Behälter 2 das zu erfassende Medium in einer ausreichenden Menge, sodass es mittels einer Sensoreinrichtung 4 hinsichtlich seiner Eigenschaften erfasst werden kann. Die Sensoreinrichtung 4 ist daher ganz oder zumindest teilweise von dem Medium umgeben, wobei die Sensoreinrichtung 4 soweit von dem Medium umgeben sein muss, dass eine ausreichend verlässliche Messung möglich ist. Es ist ebenfalls das Medium sehr allgemein zu interpretieren, da jedes Medium wie beispielsweise wässrige Lösungen, Waschlaugen, Öle verschiedener Art und dergleichen einer Messung unterzogen werden können. Zur Vereinfachung der Darstellung wird nachstehend die vorliegende Erfindung ohne eine Beschränkung hierauf in Verbindung mit der Überprüfung einer Waschlauge beschrieben.

Mittels der Sensoreinrichtung 4 werden zunächst die Eigenschaften des fluiden Mediums 3 in Form einer Waschlauge überprüft und entsprechende Erfassungssignale bereitgestellt. Die Vorrichtung 1 gemäß Figur 1 umfasst ferner eine Steuerungseinrichtung 5, die einerseits zur Steuerung der gesamten Abläufe der Erfassung mittels Impedanzspektroskopie dient und andererseits eine Ansteuerung der Sensoreinrichtung 4 veranlasst und eine Auswertung der von der Sensoreinrichtung 4 abgegebenen Signale durchführt. Zu diesem Zweck ist die Steuerungseinrichtung 5 mit einer Ansteuerungseinrichtung 6 verbunden, die in Abhängigkeit von Anweisungen und Befehlen der Steuerungseinrichtung 5 die Sensoreinrichtung 4 mit entsprechenden elektrischen Signalen ansteuert. Beispielsweise werden an die Sensoreinrichtung 4 zur Messung Ströme und Spannungen in Verbindung mit vorbestimmten Frequenzen oder Frequenzbereichen angelegt. Die Steuerungseinrichtung 5 ist auch vorgesehen zur Erfassung der Temperatur des Mediums 3 und ist hierzu mit einer (in den Figuren nicht gezeigten) Temperaturerfassungseinrichtung verbunden. Die Sensoreinrichtung 4 und die Ansteuerungseinrichtung 6 können hinsichtlich ihrer Funktion zusammengefasst werden und bilden eine Messeinrichtung 60.

Die Steuerungseinrichtung 5 ist ferner mit einer Steuereinheit 7 verbunden, die direkt in Zusammenhang mit dem Behälter 2 steht. Wird beispielsweise angenommen, dass der Behälter 2 die Trommel einer Wascheinrichtung (Waschmaschine) ist, so stellt die Steuereinheit 7 die eigentliche elektronische Steuerung der Wascheinrichtung dar. In der Wascheinrichtung werden in der entsprechenden und programmierten Weise Wassermenge und Waschmittelzulauf sowie Waschtemperaturen und Zeitverlauf des Waschvorgangs gesteuert. Wie es nachstehend noch im Einzelnen angegeben ist, kann die Steuerungseinrichtung 5 in Abhängigkeit von Messergebnissen über die Sensoreinrichtung 4 die Steuereinheit 7 dahingehend beeinflussen, dass abweichend von einem bestimmten Programm eine größere oder kleinere Wassermenge oder eine größere oder kleinere Waschmittelmenge eingesetzt oder beispielsweise auch eine Veränderung der Waschtemperatur vorgenommen wird. Somit kann durch die Steuerungseinrichtung 5 in Verbindung mit der Steuereinheit 7 eine variable Steuerung oder auch eine Regelung vorgenommen werden. Funktionen können hierbei überlagert werden. Mittels eines Pfeils P gemäß Figur 1 ist die Einflussnahme der Steuereinheit 7 auf den Waschvorgang schematisch angedeutet.

Die Steuerungseinrichtung 5 steht ferner in Verbindung mit einer Speichereinrichtung 8, in der zur Durchführung der Erfassung von Materialeigenschaften (Impedanzspektroskopie) entsprechende Daten und Programme abgespeichert sind, auf die die Steuerungseinrichtung 5 bedarfsweise zugreifen kann.

Gemäß dem vorstehend beschriebenen Aufbau werden der Sensoreinrichtung 4 auf entsprechende Anweisung der Steuerungseinrichtung 5 mittels der Ansteuerungseinrichtung 6 vorbestimmte Signale der physikalischen Größen, wie Strom, Spannung und Frequenz zugeführt, und es werden durch die Steuerungseinrichtung 5 über die Ansteuerungseinrichtung 6 die Erfassungssignale der Sensoreinrichtung 4 aufgenommen und verarbeitet, gegebenenfalls in Verbindung mit aus der Speichereinrichtung 8 ausgelesenen Programmen oder Daten. Beispielsweise kann ein Vergleich mit Grunddaten hinsichtlich der Eigenschaften des erfassten Mediums 3 durchgeführt werden. In Abhängigkeit von dem Erfassungsergebnis, beispielsweise entsprechend einer Konzentration einer erfassten Waschlauge in einer Wascheinrichtung, kann die Steuereinheit 7 angewiesen werden, bestimmte Betriebsparameter zu ändern oder beizubehalten.

In Figur 1 ist die Vorrichtung 1 zur Erfassung von Materialeigenschaften dargestellt einschließlich der Sensoreinrichtung 4, der Steuerungseinrichtung 5, der Ansteuerungseinrichtung 6 und der Speichereinrichtung.

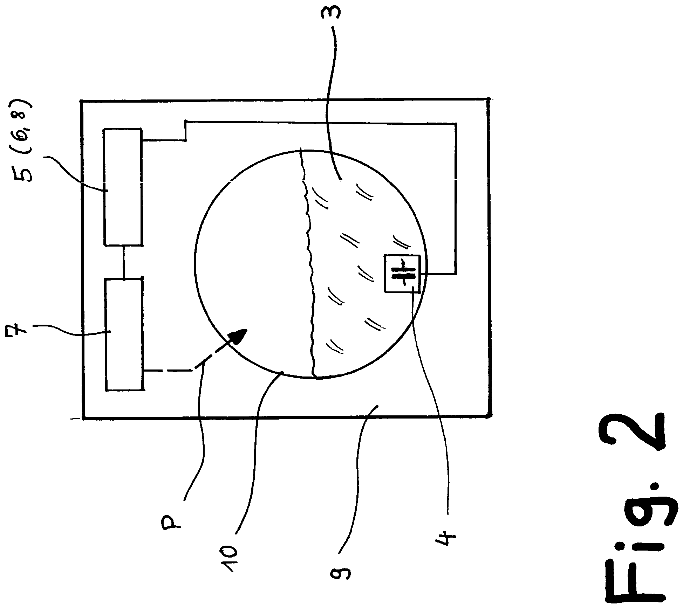

Gemäß Figur 2 ist die Vorrichtung 1 in Verbindung mit einer Wascheinrichtung 9 gezeigt. In einer Trommel 10 der Wascheinrichtung 9 befindet sich das Medium 3, und vorzugsweise in einem tieferen Bereich der Trommel 10 ist die Sensoreinrichtung 4 angeordnet und mit der Steuerungseinrichtung 5 verbunden. Im Sinne einer kompakten Anordnung der beteiligten Komponenten der Vorrichtung 1 kann die Steuerungseinrichtung 5 auch die weiteren Komponenten der Ansteuerungseinrichtung 6 und der Speichereinrichtung 8 umfassen. Die Steuerungseinrichtung 5 ist mit der Steuereinheit 7 der Wascheinrichtung 9 verbunden. Dies ist durch den Pfeil P in den Figuren 1 und 2 veranschaulicht.

Wie es aus Figur 2 erkennbar ist, kann die Vorrichtung ohne Weiteres in eine bestehende handelsübliche Wascheinrichtung 9 eingebaut werden, wobei lediglich die Sensoreinrichtung 4 und die Verbindung zwischen der Steuerungseinrichtung 5 und der Steuereinheit 7 gebildet werden müssen, sodass die Steuereinheit 7 neben ihrem eigenen Programm und den gespeicherten Daten durch die Steuerungseinrichtung 5 beeinflussbar ist, um eine Änderung der Betriebsparameter des Waschvorgangs herbeiführen zu können. Gemäß Figur 2 entspricht die Trommel 10 der Wascheinrichtung 9 dem Behälter 2 von Figur 1. Es kann ebenfalls die Steuerungseinrichtung 5 außerhalb der Wascheinrichtung 9 angeordnet sein.

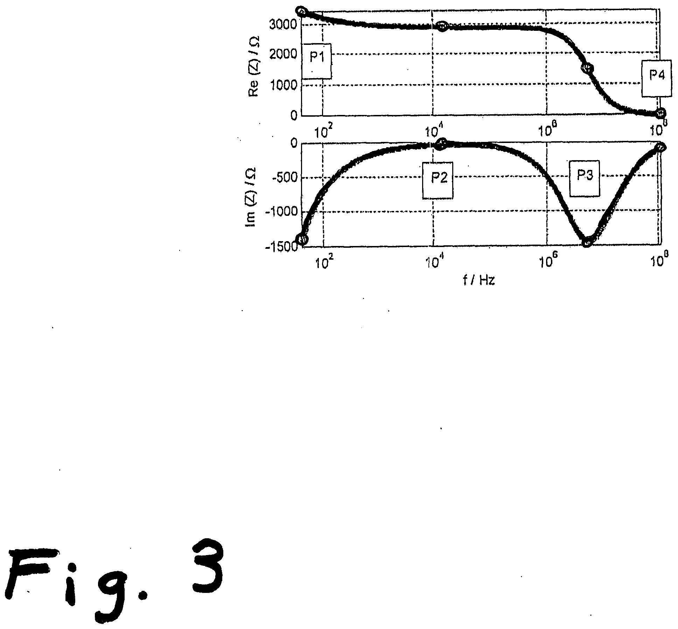

Vorstehend wurden in Verbindung mit den Figuren 1 und 2 die Funktion und die Wirkungsweise der Vorrichtung 1 beschrieben. In Verbindung mit den weiteren Figuren 3 bis 5 werden weitere Einzelheiten in Verbindung mit der Impedanzspektroskopie beschrieben, wobei zuerst auf spezielle und mit der Anwendung der Impedanzspektroskopie verbundene Eigenschaften und Besonderheiten eines Waschvorgangs eingegangen wird.

Es gibt einen Zeitpunkt während des Waschvorgangs, bei dem das Waschgut die maximale Sauberkeit besitzt. Dieser Zeitpunkt kann mit Hilfe der Impedanzspektroskopie ermittelt werden. Der Waschvorgang kann daraufhin automatisch abgebrochen und der Spülprozess eingeleitet werden. Das führt nicht nur zu einem optimalen Waschergebnis sondern auch zu einem Minimum an Waschzeit (Energieersparnis und Erhöhung der Lebensdauer der Wascheinrichtung, da innerhalb der Lebensdauer" der Wascheinrichtung mehr Waschzyklen erreicht werden können). Durch eine in Verbindung mit der Impedanzspektroskopie mögliche verbesserte oder optimale Waschmitteldosierung wird Waschmittel gespart. Auch die Verminderung des Verbrauchs von Waschmittel erhöht den Reinigungseffekt, schont die Umwelt (es werden weniger Waschmittel und weniger Wasser für den Wasch- und Spülvorgänge benötigt) und beugt Allergien (weniger Waschmittelrückstände in der Wäsche) vor.

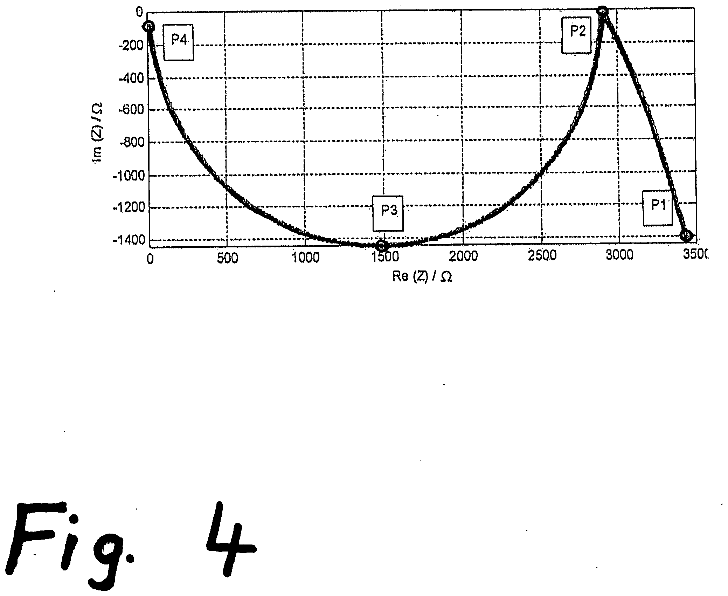

Bei dem Einsatz von Waschmitteln entstehen in der Waschlauge durch Tenside Mizellen, wobei die sogenannte kritische Mizellenbildungskonzentration (cmc) ein Maß dafür ist, wann die ideale Waschmittelmenge erreicht ist. Der Waschvorgang ist genau dann optimal, wenn die kritische Mizellenbildungskonzentration erreicht ist. Dieser Zeitpunkt kann aus dem ermittelten Impedanzspektrum abgeleitet werden. Hierbei werden besondere oder charakteristische Punkte P1 bis P4 berücksichtigt, die nachstehend noch beschrieben werden. Es wird ebenfalls die Kennlinienform, wie z. B. die Form des Halbkreises, berücksichtigt (Figuren 3 und 4).
Die kritische Mizellenbildungskonzentration ist von der Wasserhärte, der Art und dem Grad der Verschmutzung sowie der verwendeten Waschmittelmenge abhängig. Während des Waschvorgangs führt die Steuereinheit 7 solange Waschmittel zu, bis die kritische Mizellenbildungskonzentration erreicht ist. Die Parameter (Wasserhärte, Waschmittelkonzentration und Verschmutzungsgrad) der Waschlauge werden dabei ständig gemessen. Bei Bedarf wird weiteres Waschmittel zugegeben. Ist die kritische Mizellenbildungskonzentration erreicht, wird der Spülvorgang eingeleitet. Die Einleitung des Spülprozesses zum richtigen Zeitpunkt verhindert ein erneutes Anlagern der Schmutzpartikel an das Waschgut und sorgt somit für ein verbessertes Waschergebnis.
Der gesamte Waschvorgang lässt sich durch eine Steuerung oder Regelung in Verbindung mit den Erfassungen mittels der Impedanzspektroskopie vollständig automatisieren: Ermittlung der Wasserhärte in Verbindung mit dem gelösten Schmutz aus dem Waschgut, Zuführen der notwendigen Waschmittelmenge, Ermittlung der Waschlaugenparameter während des Waschvorgangs und einer damit verbundenen weiteren Zuführung von Waschmittel (falls erforderlich) bis zur kritische Mizellenbildungskonzentration, und Einleitung des Spülvorgangs. Die Durchführung einer Messung zeigt das Impedanzspektrum als individuelle, charakteristische Kennlinie. Ähnliche Messungen mit unterschiedlichen Eigenschaften (wie beispielsweise Waschlaugen mit unterschiedlicher Konzentration) zeigen qualitativ einen ähnlichen Verlauf. Die unterschiedlichen Eigenschaften sind anhand der charakteristischen Punkte P1 bis P4 erkennbar. Die Daten dieser Punkte (quantitative Unterschiede), sowie deren Lage im Impedanzspektrum sind von diesen Eigenschaften abhängig.
Das Spektrum nebst den charakteristischen Punkten eines Systems wird im Labor messtechnisch ermittelt. Für jedes so ermittelte System werden Untersuchungsmethoden festgelegt, welche es erlauben mit einem bestimmten Verfahren die notwendigen Punkte zu erfassen und zu analysieren.

In Verbindung mit der Impedanzspektroskopie sind allgemein zur Erfassung der Impedanz Z eines Bauteils oder einer Bauteileanordnung zumindest zwei Werte zu erfassen, da es sich bei der Impedanz in Verbindung mit physikalischen Wechselgrößen um eine komplexe Größe handelt. Es wird hierbei der Realteil Re(Z) und Imaginärteil Im(Z) der Impedanz oder des Impedanzvektors (gemäß einer graphischen Darstellung) bestimmt, woraus die benötigten Werte wie die Impedanz, ihr Betrag, der Phasenwinkel und dergleichen ermittelt werden können. Bei der Impedanzspektroskopie wird der Impedanzvektor über einen bestimmten Frequenzbereich (oder Bereich von Winkelgeschwindigkeiten) zu diskreten Frequenzwerten aufgenommen. Insbesondere wird in Verbindung mit der Impedanzspektroskopie neben Strom und Spannung auch der Phasenunterschied zwischen diesen beiden Größen erfasst. Der der Impedanzspektroskopie unterzogene Prüfling ist im Wesentlichen die Sensoreinrichtung 4, die eine kapazitive Messung und eine resistive Messung (Leitwertmessung) ermöglicht und die im Wesentlichen in Form eines Plattenkondensators mit Platten 11 (Figur 1) aufgebaut ist. Zwischen den Platten 11 des Plattenkondensators (die auch als Kondensatorplatten bezeichnet werden) ist ein elektrisches Feld ausgebildet, das ein Gleichfeld bei Gleichspannungsgrößen oder ein Wechselfeld bei Wechselgrößen sein kann. Das zu prüfende Medium 3 oder der zu prüfende Stoff ist zwischen die Platten 11 des Plattenkondensators anzuordnen, und es werden die Eigenschaften des Materials (des Mediums 3) über die dielektrischen Eigenschaften ermittelt.

Zur Vereinfachung der Darstellung sind die Platten 11 des Kondensators bzw. der Sensoreinrichtung 4 als ebene Platten gezeigt. Die Erfindung ist hierauf jedoch nicht festgelegt, und es können die Platten auch in der Form davon abweichen (z. B. Zylinderkondensator).

Zur Ansteuerung der Sensoreinrichtung 4 oder der Platten 11 des Plattenkondensators kann die Ansteuerungseinrichtung 6 einen Prüf- oder Testsignalgenerator aufweisen, dessen Frequenz beliebig einstellbar ist und beispielsweise innerhalb eines Frequenzbereiches von 0,1 Hz bis 120 MHz, und beispielsweise von 40 Hz bis 110 MHz mit einer maximalen Auflösung von 1 mHz liegt. Der Frequenzgenerator kann Mikroprozessor-gesteuert ausgeführt sein und kann in Abhängigkeit von Anweisungen der Steuerungseinrichtung 5 hinsichtlich seiner Frequenz und seines Spannungsbereichs eingestellt werden.

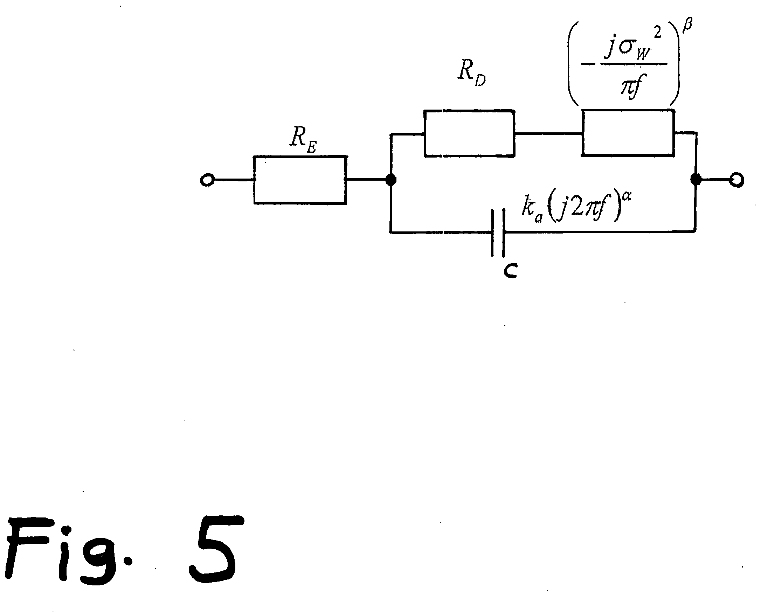

Die Kondensatorplatten 11 können angesteuert werden, indem Gleichspannungen (Gleichspannungssignale) angelegt werden, sodass bei nicht isolierten Kondensatorplatten 11 die elektrolytische Leitfähigkeit erfasst werden kann. Werden jedoch demgegenüber Wechselspannungen angelegt, so treten zusätzlich zu den ohmschen Widerständen die frequenzabhängigen Wechselstromwiderstände hinzu. In Figur 5 ist ein nachstehend noch im Einzelnen beschriebenes Ersatzschaltbild der Sensoreinrichtung 5 einschließlich des als Dielektrikum wirkenden Mediums 3 gezeigt.

In Figur 3 ist die Impedanzkennlinie aufgeteilt nach Realteil Re(Z) und Imaginärteil Im(Z) der komplexen Impedanz Z über der Frequenz (f, *ω* mit *ω* = 2*π*f) dargestellt. Es ist erkennbar, dass der Realteil (Wirkwiderstände) einen anderen Verlauf aufweist als der Imaginärteil. Im Falle der Aufbereitung der erfassten Kennlinie in Verbindung mit einem komplexen Leitwert ergäbe sich bei gleicher Aussage eine abweichende Darstellung.

Der Realteil Re(Z) und der Imaginärteil Im(Z) der komplexen Impedanz Z entsprechend der Messung mittels der Sensoreinrichtung 4 wurde beispielsweise in einem Frequenzbereich von 10² bis 10⁸ Hz erfasst. Die jeweiligen Kennlinien sind über diesem Frequenzbereich aufgetragen. Des Weiteren sind in Figur 3 die charakteristischen oder besonderen Punkte P1 bis P4 angegeben, die nachstehend noch weiter erläutert werden.

Gemäß der Darstellung in Fig. 4 ist eine Impedanzkennlinie gezeigt, wobei der Imaginärteil Im(Z) der Impedanz Z über den Realteil Re(Z) der Impedanz Z aufgetragen ist. Die vertikale Achse bezeichnet den Imaginärteil und die horizontale Achse den Realteil. In dem Diagramm gemäß Fig. 4 sind ebenfalls die besonderen oder charakteristischen Punkte P1 bis P4 angegeben. Wie es aus der graphischen Darstellung gemäß Fig. 4 erkennbar ist, bezeichnen die charakteristischen Punkte P1 bis P4 besondere Positionen innerhalb der erfassten Impedanzkennlinie. Die Impedanzkennlinie stellt die Endpunkte des jeweils erfassten Impedanzvektors in der komplexen (Impedanz-) Ebene dar. Fig. 4 zeigt somit eine graphische Darstellung einer komplexwertigen Funktion im Nyquist-Diagramm, wobei die Frequenz der Parameter ist. Die Erfindung ist anhand der beispielsweise vier charakteristischen Punkten P1 bis P4 beschrieben, wobei die Erfindung nicht auf diese Anzahl beschränkt ist. Es können weniger oder mehr als vier charakteristische Punkte betrachtet werden. Die charakteristischen Punkte bestehen aus zumindest zwei Punkten bzw. einer Mehrzahl von Punkten, die in eindeutigem Zusammenhang mit den Eigenschaften des Mediums 3 stehen. Die Erfindung bezieht sich somit auf eine vorbestimmte Anzahl n ∈ N von charakteristischen Punkten P1 bis Pn.

Die Lage der charakteristischen Punkte innerhalb der komplexen Ebene ist von den Eigenschaften des Mediums 3 abhängig. Diese Punkte sind Hoch-, Tief- oder Wendepunkte, deren Lage innerhalb der komplexen Ebene durch die zugehörige Frequenz gekennzeichnet ist. Diese Frequenz wird mittels Durchlaufen eines Teilbereichs des Impedanzspektrums und durch einen mathematischen Näherungsalgorithmus bestimmt.

Mit Hilfe dieser Frequenzbereiche oder diskreten Frequenzen werden die Daten des charakteristischen Punktes (komplexe Zahl in der komplexen Ebene) bestimmt. Aus den auf diese Weise gewonnenen Daten können entsprechend den nachstehend angegebenen Maßnahmen die charakteristischen Eigenschaften des Mediums 3 (hier am Beispiel einer Waschlauge) ermittelt werden:
- Direkte Verwendung der Daten oder Teile der Daten (beispielsweise Impedanz an einem bestimmten Punkt oder der Leitwert des Mediums 3)
- Die geometrische Lage zweier oder mehrerer charakteristischer Punkte zueinander, um bestimmte geometrische Formen der Kennlinie zu bestimmen (beispielsweise die Seitenverhältnisse einer Halbellipse oder die Dimensionen von Halbkreisen zur Bestimmung spezieller Eigenschaften des Mediums 3)
- Die Ermittlung von Steigungen und Krümmungen von Kennlinienbereichen (beispielsweise Korrelation zwischen der Steigung der Kennlinie in einem bestimmten Bereich und der Temperatur des Mediums 3).

Im Zusammenhang der Erfassungsergebnisse der Figuren 3 und 4 und den vorstehend beschriebenen speziellen Bedingungen des Waschvorgangs bezieht sich Fig. 5 auf ein Ersatzschaltbild der Sensoreinrichtung 4 und insbesondere der Anordnung mit dem Kondensatorplatten 11 in Verbindung mit den jeweiligen Dielektrischen Eigenschaften des zu erfassenden Mediums 3.

Der Widerstand RE bezeichnet den Elektrolytwiderstand und der Widerstand RD bezeichnet den Durchtrittswiderstand in verschiedenen Bereichen des Mediums 3, das sich zur Messung zwischen den Kondensatorplatten 11 (Figur 1) befindet. Die beiden Widerstände RE und RD hängen nicht von der Frequenz ab.

Wird beispielsweise mittels der Ansteuerungseinrichtung 6 an die Kondensatorplatten 11 der Sensoreinrichtung 4 eine Wechselspannung angelegt, so wird den Vorgängen an den als Elektroden dienenden Kondensatorplatten 11 der Rhythmus der Wechselstromfrequenz aufgezwungen. Durch die aufgeprägten Wechselgrößen entstehen an den Elektroden Konzentrationsschwingungen, die sich in Form einer gedämpften Welle in das Elektrolytinnere (das Medium 3) zwischen den Kondensatorplatten (Elektroden) fortpflanzen. Bei der Betrachtung von Wechselgrößen kommt zu dem Durchtrittswiderstand RD noch ein Konzentrationswiderstand hinzu, wobei dieser Widerstand eine komplexe Größe ist und als Warburg-Impedanz Z_{w} bezeichnet wird. Diese Impedanz wird meist auch als eine Serienschaltung eines frequenzabhängigen Widerstands und eines kapazitiven Widerstands mit ebenfalls frequenzabhängiger Kapazität dargestellt. Somit besitzt die Warburg-Impedanz einen frequenzabhängigen Real- und Imaginärteil.

Mittels der Messungen der Frequenzabhängigkeit der verschiedenen Widerstände und Kapazitäten können somit unterschiedliche Anteile ermittelt und damit die in den Figuren 3 und 4 gezeigten Frequenzkennlinien oder Impedanzkennlinien bestimmt werden. Man erhält damit auf einfache Weise eine umfassende Information über das zu messende Medium, die sonst mit unterschiedlichen Messverfahren erfasst werden müssten. Der in dem Ersatzschaltbild gemäß Fig. 5 gezeigte Kondensator C bezeichnet die Kapazität der Kondensatorplatten 11 oder der Elektroden.

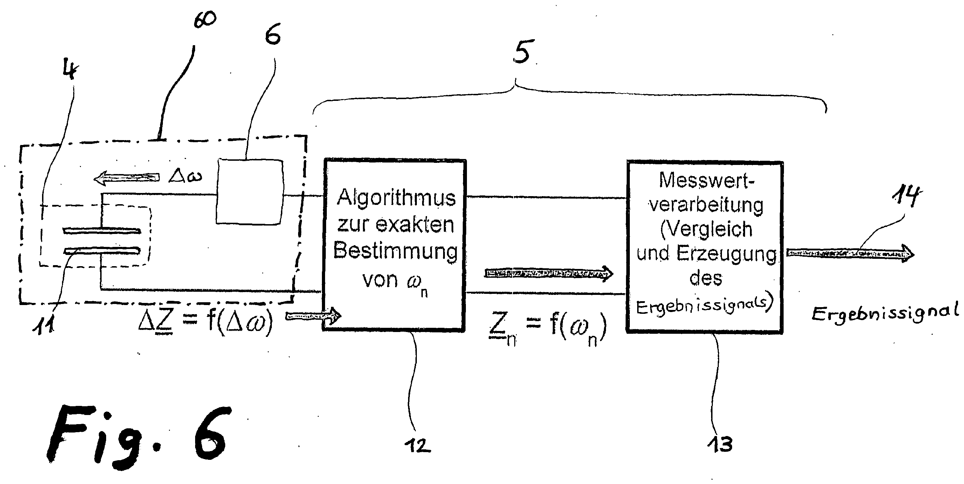

Fig. 6 zeigt in vereinfachter und schematischer Weise ein Blockschaltbild des Aufbaus und der Funktion der Vorrichtung zu Erfassung von Materialeigenschaften, wobei ein erster Block 12 und ein zweiter Block 13 (Funktionsblöcke) in der Steuerungseinrichtung 5 enthalten sind und zusammen einen Teil der Funktionen der Steuerungseinrichtung 5 bereitstellen. Sie stehen in Verbindung mit der Messeinrichtung 60 bestehend aus der Sensoreinrichtung 4 und der Ansteuerungseinrichtung 6.

In dem ersten Block 12 wird ein Algorithmus bearbeitet zur exakten Bestimmung einer vorbestimmten Frequenz f oder einer vorbestimmten Winkelgeschwindigkeit (Kreisfrequenz) *ω*. Insbesondere werden entsprechend dem ersten Block 12 aus einem Frequenzbereich die Frequenzen oder Winkelgeschwindigkeiten *ω*n durch ein mathematisches Näherungsverfahren bestimmt. Auf diese Weise können die vorstehend angegebenen charakteristischen Punkte Pn jeweils bei Einzelfrequenzen oder Einzelwinkelgeschwindigkeiten *ω*n bestimmt werden. Ausgehend dieser Bestimmung wird die mit dem ersten Block 12 verbundene Ansteuerungseinrichtung 6 angesteuert und gibt ein entsprechendes Wechselspannungssignal mit Δω an die Sensoreinrichtung 4 (die Kondensatorplatten oder Elektroden 11) ab. Entsprechend diesen Ansteuerungssignalen in Verbindung mit dem bestimmten Frequenz- oder Winkelgeschwindigkeitsbereich Δω werden Impedanzwerte ΔZ = f (Δω) in dem ersten Block 12 ausgewertet und bestimmt (Impedanzkennlinie). Es werden hieraus die n charakteristischen Punkte bestimmt, indem Impedanzwerte (Impedanzvektoren, Impedanzwerte) für die jeweiligen charakteristischen Punkte P1 bis P4 bestimmt werden gemäß Zn= f (*ω*n).

Diese Information wird einem zweiten Block 13 zugeführt, in welchem eine weitere Messwertverarbeitung durchgeführt wird. Hierbei erfolgt vorzugsweise ein Vergleichsvorgang oder Korrelationsvorgang, beispielsweise mit in der Speichereinrichtung 8 gespeicherten Basisdaten, sodass im Ergebnis des Vergleichs ein Ergebnissignal 14 gebildet wird, dass der Steuereinheit 7 (Figuren 1 und 2) beispielsweise als ein Regelsignal zugeführt wird, um den Einsatz des Mediums 3 zu steuern oder zu regeln. Dies entspricht beispielsweise der Steuerung oder Regelung einer Wassermenge oder Waschmittelmenge bei einem Waschvorgang, oder Hinweise zum Austausch eines verbrauchten Öls oder eines sonstigen fluiden Betriebsmittels einer Maschine.

Mit der erfindungsgemäßen Vorrichtung besteht die Möglichkeit einer kontinuierlichen Messung innerhalb eines Frequenzbereichs, wie es in Verbindung mit Fig. 6 und dem ersten Block 12 beschrieben ist, wobei in einem Frequenz- oder Winkelgeschwindigkeitsbereich die Impedanzkennlinie ΔZ in der komplexen Ebene ermittelt wird. Entsprechend den Ermittlungen kann somit eine Steuerung oder Regelung durchgeführt werden, wobei das zu erfassende Medium 3 kontinuierlich gemessen und sein Einsatz (wie beispielsweise eine Konzentration in Verbindung mit der Temperatur des Mediums) laufend gezielt beeinflusst werden kann.

Für den Betrieb der Vorrichtung 1 gemäß der vorstehenden Beschreibung ist somit die Anordnung gemäß Fig. 1 erforderlich, wobei das zu erfassende Medium 3 in dem Behälter 2 vorzugsweise als ein fluides Medium vorgesehen ist. Nach Einleitung des Messvorgangs in Verbindung mit der Impedanzspektroskopie unter Steuerung durch die Steuerungseinrichtung 5 erfolgt die Bestimmung eines Impedanzverlaufs oder einer Impedanzkennlinie in Verbindung mit der Vorgabe eines vorbestimmten Frequenzbereichs oder Winkelgeschwindigkeitsbereichs Δω. Dies wird vorzugsweise in Abhängigkeit von einer Steuerung durch die Steuerungseinrichtung 5 in der Ansteuerungseinrichtung 6 veranlasst. Mit den Frequenzsignalen (Δω) in dem vorbestimmten Frequenzbereich (f, *ω* = 2 *π* f) wird die Sensoreinrichtung 4 angesteuert, und es wird als Reaktion hierauf in Verbindung mit den dielektrischen Eigenschaften des Mediums 3 eine Impedanzkennlinie ΔZ für den Frequenz- oder Winkelgeschwindigkeitsbereich bestimmt. Hierzu kann ein Algorithmus und beispielsweise ein mathematisches Näherungsverfahren verwendet werden. Aus der aus der gesamten Messung hervorgehenden Impedanzkennlinie wird eine vorbestimmte Anzahl an charakteristischen Punkten (gemäß in den Figuren 3 und 4 dargestellten Impedanzkennlinien beispielsweise 4 charakteristische Punkte P1 bis P4, n = 4) bestimmt und es werden bei dieser Bestimmung die Impedanzvektoren für die charakteristischen Punkte Pn bestimmt (Zn = f (ωn)).

Es erfolgt danach eine Messwertverarbeitung in Verbindung mit den ermittelten charakteristischen Punkten, d. h der vorbestimmten Anzahl n, sodass aus einer kleinen Anzahl von n Punkten der gesamten Impedanzkennlinie eine entsprechende Messwertverarbeitung abgeleitet wird. Bei der Messwertverarbeitung wird das entsprechende Ergebnissignal (Regelungssignal, Steuerungssignal) 14 erzeugt, das einer Einrichtung oder einem Gerät zugeführt wird, in dem das hinsichtlich seiner Eigenschaften erfasste Medium 3 verwendet oder gespeichert wird. Im Sinne einer Steuerung oder einer Regelung können die Verwendung und Eigenschaft des Mediums 3 gezielt entsprechend vorbestimmter Bedingungen beeinflusst werden.

Es ist in Verbindung mit der vorstehend angegebenen Vorrichtung und ihrer Wirkungsweise erkennbar, dass die Messwertverarbeitung (beispielsweise gemäß dem zweiten Block 13 in Fig. 6) auf der Basis einer geringeren Datenmenge erfolgt, sodass Verarbeitungspotenzial eingespart und die Geschwindigkeit der Verarbeitung erhöht wird. Das Verfahren der Auswertung steht somit in Verbindung einer erheblichen Verminderung der Datenmenge gegenüber bekannten Verfahren der Messauswertung, da nur einzelne Bereiche oder eine bestimmte Anzahl charakteristischer Punkte P1 bis P4 betrachtet wird, wobei in Verbindung mit den charakteristischen Punkten die Eigenschaften des Mediums 3 ausreichend genau und schnell bestimmt werden können.

Bei der Messwertverarbeitung kann auf Daten in der Speichereinrichtung 8 zurückgegriffen werden. Es ist möglich, mit dem Zugriff auf derartige Daten eine Korrelation zwischen der Impedanzkennlinie und insbesondere der charakteristischen Punkten (beispielsweise die Punkte P1 bis P4) und Eigenschaften des Mediums herzustellen. Es werden somit den aus der Erfassung (Messung) hervorgehenden charakteristischen Punkten Eigenschaften des Mediums 3 zugeordnet. Dies kann beispielsweise mittels vorab durchgeführter Versuche und Messreihen zur Bereitstellung von Bezugsdaten erfolgen. Mittels der Bezugsdaten kann somit eine Korrelationsbetrachtung durchgeführt werden, wobei in Verbindung mit dem Beispiel der Erfassung von Eigenschaften einer Waschlauge den charakteristischen Punkten entsprechende Waschlaugen-Charakteristika zugeordnet werden können.

Die Messwertverarbeitung in der Steuerungseinrichtung 5 (Figur 1, Blöcke 12 und 13 sowie Figur 6) kann in der nachstehend beschriebenen Weise erfolgen. Hierbei werden einzelne Schritte oder Maßnahmen angegeben. Im Ergebnis der Messwertverarbeitung liegen Kenntnisse über die aktuellen Eigenschaften des untersuchten Mediums 3 vor.

Gemäß einer ersten Maßnahme in Verbindung mit der Messwertverarbeitung erfolgt im Vorfeld ein Messen einer gesamten Grund-Impedanzkennlinie über den gesamten sinnvollen oder möglichen Frequenzbereich und ein Bestimmtem von speziellen Bereichen der Grund-Impedanzkennlinie, die von Interesse sind und die spezielle Aussagen ermöglichen zu den Eigenschaften des Mediums 3. Derartige Ergebnisse können beispielsweise in der Speichereinrichtung 8 gespeichert werden. Hierbei beziehen sich die Ergebnisse, d.h. die erfasste Impedanzkennlinie auf eine einzelne Anwendung oder einen Anwendungsbereich, d. h. auf ein bestimmtes Medium 3. Die erste Maßnahme ist somit anwendungsabhängig und liefert seine grundlegende Vorinformation hinsichtlich der Impedanzkennlinie eines bestimmten Mediums 3.

Die Grund-Impedanzkennlinie über den gesamten Frequenzbereich stellt somit eine vollständige Impedanzkennlinie als eine Grundinformation dar. Im Einzelnen sind die interessierenden Bereiche Teile der Grund-Impedanzkennlinie, in denen die in Figur 4 gezeigten charakteristischen Punkte (beispielsweise P1 bis P4) liegen. Für die interessierenden Bereiche der Grund-Impedanzkennlinie werden Umgebungs-Frequenzbereiche um den Frequenzwerte eines charakteristischen Punkts Pn (n ist eine natürliche Zahl) definiert, die um einen vorbestimmten Frequenzabstand um die charakteristischen Punkte gebildet werden.

Gemäß einer zweiten Maßnahme wird einer der vorbestimmten Bereiche der Grund-Impedanzkennlinie betrachtet. Dies kann beispielsweise der Bereich um den zweiten Punkt P2 auf der Impedanzkennlinie sein, der vorzugweise eine Information hinsichtlich der Leitfähigkeit des Mediums 3 liefern kann. Hierbei wird der zugehörige aus der ersten Maßnahme resultierende Umgebungs-Frequenzbereich gewählt, in dem mit großer Wahrscheinlichkeit bei dem gleichen Medium 3 wie bei der Grund-Impedanzkennlinie der charakteristische Punkt P2 bei einer Nachmessung liegt. Es kann hier beispielsweise ein Umgebungs-Frequenzbereich der Ansteuerungssignale für die Sensoreinrichtung 4 von 140 kHz bis 160 kHz gewählt werden mit jeweils 10 kHz um den betreffenden charakteristischen Punkt der Grund-Impedanzkennlinie.

Gemäß einer dritten Maßnahme wird nach dem applikationsabhängigen groben Auswählen eines Bereichs der Grund-Impedanzkennlinie um den erwarteten charakteristischen Punkt und damit eines zugehörenden Umgebungs-Frequenzbereichs mittels eines vorbestimmten mathematischen Algorithmus die Existenz des gewünschten charakteristischen Punkts nach einer erneuten aktuellen Messung nachgewiesen und auf der Impedanzkennlinie sein aktueller Ort (aktuelle Festfrequenz bzw. sehr kleiner Frequenzbereich) bzw. aktuelle Lage bestimmt. Im vorliegenden Beispiel sei dies der Ort des zweiten charakteristischen Punkts P2 gemäß der Darstellung in Figur 4.

Gemäß einer vierten Maßnahme werden mehrere oder sämtliche der charakteristischen Punkte, beispielsweise die charakteristischen Punkte P1 bis P4, in gleicher Weise hinsichtlich ihrer Existenz und ihres Ortes bestimmt, wobei hierzu eine aktuelle feste Frequenz (oder ein sehr kleiner Frequenzbereich) des jeweiligen aktuell gemessenen charakteristischen Punkts Pn innerhalb des Umgebungs-Frequenzbereichs bestimmt wird. Diese Frequenz stellt die Lage oder den Ort des aktuell gemessenen charakteristischen Punkts Pn in der in der komplexen (Impedanz-) Ebene dar.

Die Bestimmungen gemäß der dritten und vierten Maßnahme beruhen auf der vorläufigen bzw. groben Bestimmung der interessierenden Bereiche der Grund-Impedanzkennlinie gemäß der ersten Maßnahme in Kenntnis der spezifischen Bedingungen der jeweiligen Anwendung (d. h. eines bestimmten Mediums 3), sodass in Verbindung mit der Grund-Impedanzkennlinie, die anfänglich aufgenommen wurde, relative Abweichungen zwischen den aktuell gemessenen charakteristischen Punkten Pn und der Grund-Impedanzkennlinie erfasst werden können.

Gemäß einer fünften Maßnahme können die jeweils bestimmten charakteristischen Punkte, beispielsweise die vier in Figur 4 gezeigten charakteristischen Punkte P1 bis P4, im Rahmen der Messwertverarbeitung ausgewertet werden hinsichtlich der jeweiligen Aussagen zu den Eigenschaften des tatsächlich gemessenen Mediums 3, das von gleicher Art ist wie das Medium 3, auf der Basis dessen die Grund-Impedanzkennlinie gebildet wurde. Auf der Basis der jeweils gleichartigen Medien können Umgebungs-Frequenzbereiche um die charakteristischen Punkte Pn bestimmt werden, so dass mit großer Wahrscheinlichkeit der entsprechende aktuell gemessene charakteristische Punkt Pn innerhalb des Umgebungsfrequenzbereichs liegt.

In einer zusätzlichen Maßnahme kann eine Plausibilitätsbetrachtung durchgeführt werden. Wird mittels des vorbestimmten Algorithmus in Verbindung mit der dritten Maßnahme bestimmt, dass ein im vorgewählten Umgebungs-Frequenzbereich der Impedanzkennlinie (erste und zweite Maßnahme) ein erwarteter charakteristischer Punkt nicht oder nicht eindeutig bestimmt werden kann, so ist daraus zu schließen, dass das Medium 3 in einem erheblichen Umfang nicht der vorausgesagten und angenommenen Art entspricht und die Messung nicht zu den erwarteten Messergebnissen führt. Es kann sodann eine weitere Messung zur Verifikation des Ergebnisses oder eine erneute grundlegende Gesamtmessung der Impedanzkennlinie gemäß der ersten Maßnahme durchgeführt werden, sodass die tatsächlichen Eigenschaften des Mediums 3 neu bestimmt werden können. Ergänzend kann auch vor einer erneuten grundlegenden Gesamtmessung der Impedanzkennlinie die Sensoreinrichtung 4 und die Auswertungseinrichtung überprüft werden, ob kein Messfehler vorliegt.

Bei der Analyse oder Messwertverarbeitung können zum Beispiel die Gründe für die Unmöglichkeit der aktuellen Bestimmung eines charakteristischen Punkts in einem vorgewählten Bereich (Umgebungs-Frequenzbereich) der Impedanzkennlinie an einem völlig anderen Medium 3 oder einer erheblichen Veränderung des betreffenden Mediums, z.B. durch Verschmutzung sein. Wird beispielsweise als Medium 3 ein Öl oder ein Brennstoff für eine Maschine betrachtet, dann kann eine Verschmutzung durch Wasser oder auch andere fremde Flüssigkeiten vorliegen. Bei einer Waschlauge kann eine sehr starke Verschmutzung oder eine erhebliche Über- oder Unterdosierung eines Waschmittels vorliegen.

Auf die vorstehend beschriebene Weise sind grobe Fehler oder Änderungen in Eigenschaften des Mediums 3 sehr schnell und mit einem geringen Aufwand zu ermitteln. Zur Vermeidung von Fehlmessungen oder einer Fehlinterpretation des Messergebnisses kann in dem Fall, dass sich ein zu erwartender charakteristischer Punkt nicht finden oder verifizieren lässt, ein weiterer charakteristischer Punkt betrachtet werden. Kann auch dieser weitere (andere) charakteristische Punkt nicht bestätigt und hinsichtlich seiner Frequenz nicht oder nicht präzise bestimmt werden, lässt sich eindeutig auf eine grobe Abweisung der Eigenschaften des Mediums 3 schließen.

Es besteht in diesem Zusammenhang als ein Anwendungsbeispiel auch die Möglichkeit, mittels der Erfindungsgemäßen Anordnung der Sensoreinrichtung 4 und der Steuerungseinrichtung 5 zur Messwertauswertung beispielsweise bei einer entsprechenden Auslegung des Sensors und der zugehörigen Auswertung zwischen verschiedenen Brennstoffarten (Dieselbrennstoff oder Motorbenzin) zu unterscheiden. In jedem Fall kann die Steuerungseinrichtung 5 nach Erfassen derartiger grober Abweichungen relativ zu der Grund-Impedanzkennlinie gemäß der ersten Maßnahme dem Benutzer eines Geräts, in das die Vorrichtung eingebaut ist, mittels einer entsprechenden Anzeigeeinrichtung Hinweise geben.

Durch die erfindungsgemäße Vorgehensweise gelangt man so von einer applikationsabhängigen Ausgangslage gemäß der ersten Maßnahme mit einem erheblich verringerten Aufwand zu einem schnellen verlässlichen Erfassungsergebnis bezüglich der aktuellen Eigenschaften des Mediums 3.

Mit der Information über die vorbestimmte Anzahl der aktuell gemessenen charakteristischen Punkte (beispielsweise der charakteristischen Punkte P1 bis P4) gemäß den ersten bis fünften Maßnahmen steht entsprechend der vorab erfassten Grund-Impedanzkennlinie die gesamte Information über die aktuellen Eigenschaften des Mediums 3 (relativ zur Grund-Impedanzkennlinie gemäß der ersten Maßnahme) zur Verfügung. Es kann daher mit einfachen Einrichtungen und auch außerhalb von Laborbedingungen ein verlässliches Ergebnis erreicht werden, wobei der hierzu erforderliche Aufwand erheblich geringer ist als das jedesmalige vollständige erfassen der aktuellen Impedanzkennlinie. Eine aktuelle Messung erfolgt nur in den Umgebungs-Frequenzbereichen im Hinblick auf gemäß der Grund-Impedanzkennlinie zu erwartende charakteristische Punkte, so dass der Aufwand der Datenerfassung und Datenauswertung erheblich vermindert ist. Es können somit auch kommerzielle Geräte, wie beispielsweise Haushaltsgeräte, eine derartige Sensoreinrichtung mit zugehöriger Auswertung aufweisen.

Gemäß der Darstellung in Figur 6 umfasst der Erste Block 12 den Algorithmus zur Bestimmung der Winkelgeschwindigkeiten oder Frequenzen aus der Grundlmpedanzkennlinie, und die Funktion des zweiten Blocks 13 bewirkt eine Messwertverarbeitung im Verbindung mit einem Vergleich mit der Grund-Impedanzkennlinie und Erzeugung eines Ergebnissignals, das kennzeichnend ist für die aktuellen Eigenschaften des erfassten Mediums 3. Die Grund-Impedanzkennlinie kann in der Speichereinrichtung 8 gemäß Figur 1 gespeichert sein.

Gemäß der vorstehenden Beschreibung des Verfahrens werden auf der Basis der vorab definierten Grund-Impedanzkennlinie für ein bestimmtes Medium somit gemäß der dortigen Lage der charakteristischen Punkte die Umgebungs-Frequenzbereiche um diese Punkte definiert. Innerhalb der Umgebungs-Frequenzbereiche wird die aktuelle Messung durchgeführt, wobei mit dieser Messung eine neue Lage (Frequenzwert) des betreffenden charakteristischen Punkts bestimmt wird. Aus der durch eine Frequenzinformation bestimmten neuen Lage des betreffenden charakteristischen Punkts des zugehörigen Umgebungs-Frequenzbereichs wird relativ zur ursprünglichen Lage eine Information zu den Eigenschaften des Mediums gewonnen.

Mit der einmaligen Erfassung der Grund-Impedanzkennlinie und dem späteren Messen lediglich innerhalb der Umgebungs-Frequenzbereiche um die charakteristischen Punkte kann der Aufwand zur Auswertung des Messergebnisses erheblich vermindert werden, so dass auch außerhalb eines Laborbetriebs in handelsüblichen Geräten (beispielsweise Waschmaschinen bzw. Wascheinrichtungen oder Geschirrspüleinrichtungen) die Vorrichtung in Verbindung mit dem zugehörigen Verfahren eingesetzt werden kann.

Hinsichtlich der Anwendung der Vorrichtung 1 als ein Waschlaugensensor kann die optimale Waschmittelmenge in Verbindung mit der optimalen Waschkraft, eine effiziente Ressourcennutzung in Bezug auf Energie, Wasser und Waschmittelmenge (Dosierung) sowie durch eine genaue Steuerung oder Regelung auch in zeitlicher Hinsicht ein sehr gutes Reinigungsergebnis erzielt werden. Insbesondere kann beispielsweise der optimale Zeitpunkt bestimmt werden zwischen Hauptwäsche und Spülung, um eine verbesserte Sauberkeit zu erreichen.

Der Einsatz der Impedanzspektroskopie ist in vielen Bereichen möglich, in denen bisher aufwendige Labormessungen erforderlich waren, um Material Eigenschaften zu bestimmen. Es kann ferner auch die Messung und Überwachung eines Batterieladezustands und eines Wartungszustands in Verbindung mit einer Erfassung des Säurezustands der Batterie durchgeführt werden. Es können auch Lebensmittel in Bezug auf Konsistenz, Qualität und Fremdstoffe sowie eine Vielzahl von Werkstoffen im Hinblick auf Veränderungen (beispielsweise Gefügeveränderung) überprüft werden. Es ist des Weiteren möglich, eine qualitative Zusammensetzung von Flüssigkeiten zu überprüfen und eine Analyse eines Veränderungsprozesses, beispielsweise in Bezug auf eine Alterung oder Verschmutzung vorzunehmen. Hierzu ist die vorstehend beschriebene Vorrichtung 1 geeignet, auf einfache und schnelle Weise und verlässlich eine genaue Bestimmung der Materialeigenschaften durchzuführen. Eine Anwendung ergibt sich auch in der pharmazeutischen oder chemischen Industrie, wobei hier unerwünschte Änderungen in den Materialeigenschaften erkannt werden können. Die Sensoreinrichtung und die Auswertung sind dann produktspezifisch ausgelegt. Es können geringfügige Änderungen der Produkteigenschaften insbesondere im medizinischen Bereich ermittelt werden (beispielsweise bei medizinischen Reinigungsflüssigkeiten).

Hierzu können in der Speichereinrichtung 8 zuvor abgespeicherte Messwerte aus bekannten Eigenschaften gebildet werden. Auf der Basis dieser Daten kann eine Korrelationsbetrachtung zu den gewünschten Daten über die Materialeigenschaften führen. Im Falle eines Nicht-Fluidmediums können auch die Feststoffe zwischen den Kondensatorplatten 11 der Sensoreinrichtung 4 gebracht werden.

Des Weiteren ist es möglich und teilweise erforderlich, für unterschiedliche Sensoreinrichtungen unterschiedliche Auswertungen der Sensorsignale vorzusehen. Dies ist ungeachtet dessen möglich, dass das vorstehend beschriebene Grundprinzip der Erfassung der Impedanzkennlinie mittels der Impedanzspektroskopie und speziell der Bestimmung einer vorbestimmten Anzahl charakteristischer Punkte der Impedanzkennlinie nicht verlassen werden muss. Es können auch mehrere Sensoren für mehrere Erfassungen und eine Mittelwertbildung vorgesehen sein, wobei die Sensoren mittels derselben Auswertungseinrichtung in Form der Steuerungseinrichtung 5 ausgewertet werden, um eine unnötige Streuung zu vermeiden.

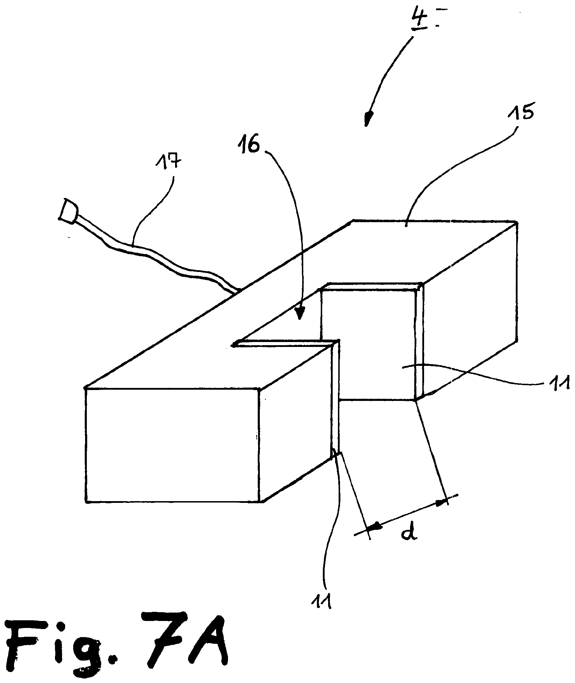

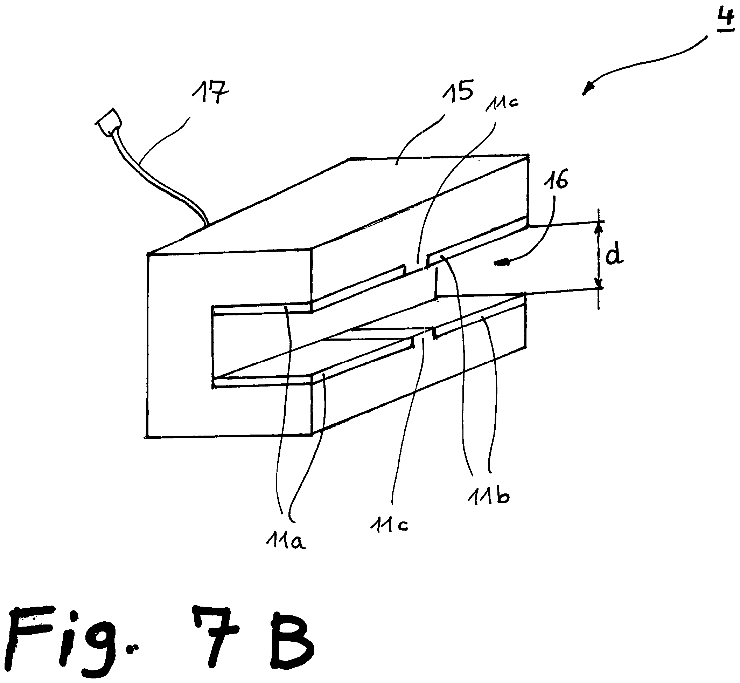

Die Fig. 7 (enthaltend Figuren 7A und 7B) zeigt Anordnungen der Sensoreinrichtung 4 mit den entsprechenden Kondensatorplatten 11.

Fig. 7A zeigt die Sensoreinrichtung 4, bei der in einem Hauptkörper 15 aus isoliertem Material eine Aussparung 16 vorgesehen ist. Die Aussparung 16 ist derart angeordnet, dass die beiden Kondensatorplatten 11 aus einem leitfähigen Material, beispielsweise aus einem Edelstahl, eigesetzt werden können, sodass sie in einem Abstand d einander gegenüber stehen. Auf einer Seite des Hauptkörpers 15 kann in Abhängigkeit von den Anwendungsbedingungen eine elektrische Leitungsverbindung 17 vorgesehen sein. Mittels dieser Leitungsverbindung 17 erfolgt die elektrische Verbindung zu der Ansteuerungseinrichtung 6 bzw. der Messeinrichtung 60 oder der Steuerungseinrichtung 5, wenn diese in einem Gerät zusammen gefasst sind. Es können mehrere Sensoreinrichtungen gemäß Fig. 7A verwendet werden.

Der Abstand d ist dabei in Abhängigkeit davon zu wählen, welcher Art das zu erfassende Medium 3 ist. Beispielsweise kann ein Plattenabstand von 6 bis 8 Millimetern vorgesehen sein, wobei berücksichtigt werden muss, ob in dem zu erfassenden Medium Feststoffe einer bestimmten Größe enthalten sind oder im Verlauf eines Vorgangs gebildet werden können, die sich bei einem zu engen Plattenabstand d anlagern können und die Erfassung der dielektrischen Eigenschaften des Mediums 3 verfälschen können.

Gemäß Fig. 7B sind bei einer gleichartigen Anordnung in dem Hauptkörper 15 im Bereich der Aussparung 16 zwei Plattenpaare 11a und 11b vorgesehen. Beide Plattenpaare 11a und 11b können über die elektrischen Leitungsverbindung 17 mit der Ansteuerungseinrichtung 6 (Messeinrichtung 60) oder der Steuerungseinrichtung 5 verbunden sein.

Die beiden Plattenpaare 11a und 11b stellen zwei voneinander unabhängige Kondensatoren da und können identisch ausgeführt oder unterschiedlich sein. Zwischen den Plattenpaaren 11a und 11b liegt ein Isolationsbereich 11c. Im Allgemeinen weisen die beiden Plattenpaare 11a und 11b einen gleichen Plattenabstand d auf, wobei auch hier mögliche enthaltene oder gebildete Feststoffe in dem zu erfassenden Medium 3 zu berücksichtigen sind.

Es besteht gemäß Fig. 7B ebenfalls die Möglichkeit, eines der Plattenpaare 11a beispielsweise aus Edelstahl zu fertigen und das zweite Plattenpaar 11b, das ebenfalls aus Edelstahl bestehen kann, isoliert auszuführen, in dem auf diesem Plattenpaar in Richtung des zu erfassenden Mediums eine dünne isolierende Schicht aufgebracht wird, sodass zwischen den Platten und dem Medium 3 keine elektrisch leitende Verbindung besteht.

Dies ermöglicht weitere Messungen, die gleichzeitig oder nacheinander durchgeführt werden können, um weitere Information hinsichtlich der Materialeigenschaften des zu erfassenden Mediums zu erhalten. Es ist somit eine konduktive und kapazitive Messung möglich.

Wird beispielsweise die Vorrichtung 1 als ein Sensor zur Erfassung der Eigenschaften eines Öls verwendet (Ölqualitäts-Sensor), dann ist es auch möglich, mit kleineren Abständen d von beispielsweise 1 bis 3 mm zu arbeiten.

Die erfassten Werte geben auch Aufschluss auf die Waschmittelkonzentration bei einem Waschvorgang, die Wasserhärte, die Temperaturen sowie den Verschmutzungsgrad einer Wäsche. Diese Parameter können aus der Messung entsprechend den vorstehenden Angaben abgeleitet werden. Bei der Wirkungsweise als Ölqualitätssensor können die Öleigenschaften und insbesondere ein Verschmutzungsgrad durch Feststoffe oder beispielsweise auch durch Fremdstoffe wie Kondenswasser ermittelt werden.

Es ist gemäß den vorstehenden Betrachtungen sinnvoll, bei der Messung mittels der Impedanzspektroskopie die Temperatur des gemessenen Mediums 3 zu erfassen, da teilweise Änderungen der dielektrischen Eigenschaften mit der Temperatur erfolgen. Insbesondere treten mit steigender Temperatur Änderungen der Dichte der Medien auf, sodass dies Auswirkungen auf die dielektrischen Eigenschaften, d.h. auf die Permittivität hat.

Da innerhalb des vorbestimmten und von der Steuerungseinrichtung 5 vorgegebenen Frequenzbereichs eine kontinuierliche Messung durchgeführt wird, besteht die Möglichkeit, eine Gradientenerkennung vorzunehmen, d.h. Änderungen zu erfassen, die im Verlauf der Messung oder im Verlauf eines Prozesses die dielektrischen Eigenschaften des Mediums 3 verändern. Aus diesen Messungen können Tendenzen des sich ändernden Verhaltens eines jeweiligen Mediums 3 bestimmt werden, und es können ferner Grenzwerte bestimmt werden, ab denen bei einer automatisierten Messung Hinweise an einen Benutzer gegeben werden, dass erhebliche Änderungen der Eigenschaften des Mediums 3 eingetreten sind. Es kann diese Information des Weiteren auch in eine gezielte Steuerung oder Regelung einfließen.

Es ergeben sich bei der Durchführung der Impedanzspektroskopie gemäß der vorliegenden Erfindung die folgenden Vorteile. Mit der Untersuchung eines Frequenzbereichs ist die Ermittlung der charakteristischen Punkte individuell (abhängig von den Parametern des zu erfassenden Mediums 3) möglich. Mit Hilfe des mathematischen Algorithmus ist eine exakte Bestimmung diese Punktes sowie der zugehörigen Impedanz möglich. Im Vergleich hierzu ist ein Verfahren mit einer vorgegebenen Frequenz ungenau. Dies macht sich besonders bei der Verwendung vieler Parameter/Charakteristika bemerkbar (Fehlerfortpflanzung). Ferner ergibt sich eine zu lange Bearbeitungszeit bei der Untersuchung des vollständigen Frequenzbereichs, wobei die auch kostspielig ist. Die vorstehend angegebene Vorrichtung 1 gemäß der vorliegenden Erfindung und ihre Wirkungsweise (Messverfahren) stellen einen optimalen Kompromiss dar zwischen der Genauigkeit und dem erforderlichen Aufwand bei gleichzeitig minimalen Kosten.

Die Erfindung wurde vorstehend in Verbindung mit Ausführungsbeispielen beschrieben.

Es ist jedoch für den auf diesem Gebiet tätigen Fachmann selbstverständlich, dass die Ausgestaltung der vorliegenden Erfindung gemäß dem vorstehend beschriebenen Figuren und für die jeweiligen Bauteile und Komponenten verwendeten Bezugszeichen in den Figuren und der Beschreibung sowie die beispielhaften Angaben nicht einschränkend auszulegen sind. Somit ist die Erfindung auf die angegebene Darstellung in den Figuren insbesondere auf Dimensionen und Anordnungen nicht beschränkt. Als zur Erfindung gehörig werden sämtliche Ausführungsformen und Varianten angesehen, die unter die beigefügten Patentansprüche fallen.

## Patentansprüche

1. Vorrichtung zur Erfassung von Materialeigenschaften eines Mediums, mit
- einer Messeinrichtung (60) einschließlich einer Sensoreinrichtung (4), die mit dem Medium (3) in Verbindung steht, und einer Ansteuerungseinrichtung (6) zur Ansteuerung der Sensoreinrichtung mit Signalen eines vorbestimmten Frequenzbereichs, und
- einer Steuerungseinrichtung (5) zur Steuerung des Betriebs der Messeinrichtung (60) und Vorgabe des vorbestimmten Frequenzbereichs, wobei
- die Ansteuerungseinrichtung (6) vorgesehen ist zur Bestimmung des Verlaufs der Impedanz Z des Mediums (3) entsprechend dem vorbestimmten Frequenzbereich in Abhängigkeit von der Frequenz, und zur Ausgabe einer Grund-Impedanzkennlinie einschließlich einer Mehrzahl charakteristischer Punkte (P1 bis P4), und
- die Steuerungseinrichtung (5) vorgesehen ist zur Auswertung des der Grund-Impedanzkennlinie, und vorgesehen ist zum:
(a) Bestimmen eines jeweiligen Umgebungs-Frequenzbereichs der Grund-Impedanzkennlinie um einen jeweiligen der charakteristischen Punkte,
(b) Wiederholen der vorherigen Bestimmung für zumindest eine vorbestimmte Anzahl der Mehrzahl der charakteristischen Punkte der Grund-Impedanzkennlinie,
(c) Bestimmen der Frequenz der Lage eines jeweiligen charakteristischen Punkts durch eine aktuelle Messung in jedem Umgebungs-Frequenzbereich, und
(d) Bestimmen der Eigenschaften des Mediums (3) aus der Frequenz der Lage der jeweiligen charakteristischen Punkte gemäß (c) aus der aktuellen Messung in Verbindung mit zuvor gespeicherten Bezugswerten und Erzeugen eines Ergebnissignals bezüglich der Eigenschaften des Mediums (3), und wobei
(e) die charakteristischen Punkte (P1 bis P4) in Form von diskreten Messpunkten zu vorbestimmten Frequenzen innerhalb des Frequenzbereichs vorgesehen sind, und
(f) die jeweiligen Umgebungs-Frequenzbereiche bestimmt werden als ein vorbestimmter Frequenzbereich kleiner und größer als die Frequenz des jeweiligen charakteristischen Punkts (P1 bis P4) der Grund-Impedanzkennlinie.

2. Vorrichtung nach Anspruch 1, wobei die Sensoreinrichtung (4) Kondensatorplatten (11) aufweist, zwischen denen sich ein Teil des Mediums (3) befindet, und die Sensoreinrichtung (4) vorgesehen ist zur Erfassung der komplexen Impedanz Z des Mediums in dem vorbestimmten Frequenzbereich.

3. Vorrichtung nach Anspruch 2, wobei das Medium (3) in einem Prozessablauf verwendet wird und die Steuerungseinrichtung (5) vorgesehen ist, das Ergebnissignal zur Beeinflussung des Prozessablaufs einer externen, an die Steuerungseinrichtung anschließbaren Steuereinheit (7) zuzuführen.

4. Vorrichtung nach einem der Ansprüche 1 bis 3, wobei die Ansteuerungseinrichtung (6) vorgesehen ist, ein Spannungssignal mit dem vorbestimmten Frequenzbereich an die Sensoreinrichtung (4) anzulegen.

5. Vorrichtung nach einem der Ansprüche 1 bis 4, wobei die Steuerungsvorrichtung (5) einen ersten Block (12) aufweist, der vorgesehen ist zur Bestimmung von Einzelfrequenzen (ωn), denen die jeweiligen charakteristischen Punkte (P1 bis P4) des Impedanzverlaufs zugeordnet sind.

6. Vorrichtung nach Anspruch 5, wobei die Steuerungseinrichtung (5) einen zweiten Block (13) aufweist, der vorgesehen ist zur Verarbeitung der jeweiligen Impedanz (Zn) der charakteristischen Punkte und Erzeugen des Ergebnissignals (14).

7. Vorrichtung nach Anspruch 6, wobei der zweite Block (13) der Steuerungseinrichtung (5) ferner vorgesehen ist zur Verarbeitung lediglich der Impedanzen (Zn) der charakteristischen Punkte (P1 bis P4) und Zuordnung von jeweiligen Materialeigenschaften des Mediums (3) zu den charakteristischen Punkten (P1 bis P4).

8. Vorrichtung nach Anspruch 7, wobei der zweite Block (13) der Steuerungseinrichtung (5) ferner vorgesehen ist, die Zuordnung von jeweiligen Materialeigenschaften des Mediums (3) zu den charakteristischen Punkten (P1 bis P4) in Abhängigkeit von zuvor gespeicherten Bezugswerten vorzunehmen.

9. Vorrichtung nach einem der Ansprüche 2 bis 8, wobei die Kondensatorplatten (11; 11a, 11b) zu der Sensoreinrichtung (4) paarweise vorgesehen sind und aus einem leitenden Material bestehen, und wobei zumindest zwei Plattenpaare vorgesehen sind, von denen ein Plattenpaar Kondensatorplatten aufweist, die mit einer Isolierschicht versehen sind.

10. Verfahren zur Erfassung von Materialeigenschaften eines Mediums auf der Basis einer für das Medium (3) zuvor in einem vorbestimmten Frequenzbereich erfassten Grund-Impedanzkennlinie einschließlich einer Mehrzahl charakteristischer Punkte (P1 bis P4),
mit den Schritten:
(a) Bestimmen eines jeweiligen Umgebungs-Frequenzbereichs der Grund-Impedanzkennlinie um einen jeweiligen der charakteristischen Punkte,
(b) Wiederholen des vorherigen Bestimmungsschritts für zumindest eine vorbestimmte Anzahl der Mehrzahl der charakteristischen Punkte der Grund-Impedanzkennlinie,
(c) Bestimmen der Frequenz der Lage eines jeweiligen charakteristischen Punkts durch eine aktuelle Messung in jedem Umgebungs-Frequenzbereich, und
(d) Bestimmen der Eigenschaften des Mediums (3) aus der Frequenz der Lage der jeweiligen charakteristischen Punkte gemäß Schritt (c) aus der aktuellen Messung in Verbindung mit zuvor gespeicherten Bezugswerten und Erzeugen eines Ergebnissignals bezüglich der Eigenschaften des Mediums (3),
wobei
(e) die charakteristischen Punkte (P1 bis P4) in Form von diskreten Messpunkten zu vorbestimmten Frequenzen innerhalb des Frequenzbereichs vorgesehen sind, und
(f) die jeweiligen Umgebungs-Frequenzbereiche bestimmt werden als ein vorbestimmter Frequenzbereich kleiner und größer als die Frequenz des jeweiligen charakteristischen Punkts (P1 bis P4) der Grund-Impedanzkennlinie.

11. Verfahren nach Anspruch 10, wobei das Bestimmen der Lage der jeweiligen charakteristischen Punkte mit einer aktuellen Messung nach Schritt (c) mittels eines Algorithmus erfolgt.

12. Verfahren nach Anspruch 10 oder 11, wobei die Grund-Impedanzkennlinie über den gesamten Frequenzbereich ermittelt und als Referenz-Information abgespeichert wird, und die Eigenschaften des betreffenden Mediums (3) aus einem Vergleich der aktuell gemessenen Werte innerhalb der Umgebungs-Frequenzbereiche um die jeweiligen charakteristischen Punkte mit den gespeicherten Werten bestimmt werden.

## Claims

1. Device for detecting material properties of a medium, with
- a measuring device (60) including a sensor device (4) which is in contact with the medium (3), and an actuator (6) for driving the sensor device with signals of a predetermined frequency range, and
- a control device (5) for controlling the operation of the measuring device (60) and setting the predetermined frequency range, wherein
- the actuator (6) is provided for determining the course of the impedance Z of the medium (3) corresponding to the predetermined frequency range depending on the frequency, and for emitting a basic impedance characteristic curve including a plurality of characteristic points (P1 to P4), and
- the control device (5) is provided for evaluating the basic impedance characteristic curve, and is provided for:
(a) determining a respective local frequency range of the basic impedance characteristic curve around one respective characteristic point,
(b) repeating the previous determination for at least a predetermined number of the plurality of characteristic points of the basic impedance characteristic curve,
(c) determining the frequency of the position of a respective characteristic point by an actual measurement in each local frequency range, and
(d) determining the properties of the medium (3) from the frequency of the position of the respective characteristic points according to (c) from the actual measurement in connection with previously stored reference values and generating a result signal with respect to the properties of the medium (3),
and wherein
(e) the characteristic points (P1 to P4) are provided in the form of discrete measurement points at predetermined frequencies within the frequency range, and
f) the respective local frequency ranges are determined as a predetermined frequency range smaller or larger than the frequency of the respective characteristic point (P1 to P4) of the basic impedance characteristic curve.

2. Device according to claim 1, wherein the sensor device (4) comprises capacitor plates (11), between which part of the medium (3) is arranged, and the sensor device (4) is provided for detecting the complex impedance Z of the medium in the predetermined frequency range.

3. Device according to claim 2, wherein the medium (3) is used in a process flow and the control device (5) is provided for transmitting the result signal to an external control unit (7) which can be connected to the control device, for influencing the process flow.

4. Device according to any one of claims 1 to 3, wherein the actuator (6) is provided for applying a voltage signal with the predetermined frequency range to the sensor device (4).

5. Device according to any one of claims 1 to 4, wherein the control device (5) comprises a first block (12) provided for determining single frequencies (ωn) to which the respective characteristic points (P1 to P4) of the impedance flow are allocated.

6. Device according to claim 5, wherein the control device (5) comprises a second block (13) provided for processing the respective impedance (Zn) of the characteristic points and generating the result signal (14).

7. Device according to claim 6, wherein the second block (13) of the control device (5) is further provided for processing only the impedances (Zn) of the characteristic points (P1 to P4) and allocating respective material properties of the medium (3) to the characteristic points (P1 to P4).

8. Device according to claim 7, wherein the second block (13) of the control device (5) is further provided for carrying out the allocation of the respective material properties of the medium (3) to the characteristic points (P1 to P4) depending on previously stored reference values.

9. Device according to any one of claims 2 to 8, wherein the capacitor plates (11; 11a, 11b) are provided in pairs in the sensor device (4) and consist of a conducting material, and wherein at least two pairs of plates are provided, one pair of which comprising capacitor plates having an insulating layer.

10. Method for detecting material properties of a medium on the basis of a basic impedance characteristic curve including a plurality of characteristic points (P1 to P4) previously detected for the medium (3) in a predetermined frequency range, comprising the steps of:
(a) determining a respective local frequency range of the basic impedance characteristic curve around one respective characteristic point,
(b) repeating the previous step of determining for at least a predetermined number of the plurality of characteristic points of the basic impedance characteristic curve,
(c) determining the frequency of the position of a respective characteristic point by an actual measurement in each local frequency range, and
(d) determining the properties of the medium (3) from the frequency of the position of the respective characteristic points according to step (c) from the actual measurement in connection with previously stored reference values and generating a result signal with respect to the properties of the medium (3),
wherein
(e) the characteristic points (P1 to P4) are provided in the form of discrete measurement points at predetermined frequencies within the frequency range, and
(f) the respective local frequency ranges are determined as a predetermined frequency range smaller or larger than the frequency of the respective characteristic point (P1 to P4) of the basic impedance characteristic curve.

11. Method according to claim 10, wherein determining of the position of the respective characteristic points is carried out by an actual measurement according to step (c) by means of an algorithm.

12. Method according to claim 10 or 11, wherein the basic impedance characteristic curve is determined over the complete frequency range and is stored as reference information, and the properties of the respective medium (3) are determined from a comparison of the actual measured values within the local frequency ranges around the respective characteristic points with the stored values.

## Revendications

1. Appareil de détection des caractéristiques de matériaux d'un milieu, avec
- un dispositif de mesure (60) comprenant un dispositif capteur (4), qui communique avec le milieu (3), et un dispositif d'actionnement (6) pour l'actionnement du dispositif capteur avec des signaux d'une plage de fréquence prédéterminée, et
- un dispositif de commande (5) pour la commande du fonctionnement du dispositif de mesure (60) et la prescription de la plage de fréquence prédéterminée, dans lequel
- le dispositif d'actionnement (6) est prévu pour la détermination du tracé de l'impédance Z du milieu (3) conformément à la plage de fréquence prédéterminée en fonction de la fréquence, et pour la sortie d'une courbe caractéristique d'impédance de base comprenant une pluralité de points caractéristiques (P1 à P4), et
- le dispositif de commande (5) est prévu pour l'évaluation de la courbe caractéristique d'impédance de base, et est prévu pour :
(a) la détermination d'une plage de fréquence environnante respective de la courbe caractéristique d'impédance de base autour d'un point respectif parmi les points caractéristiques,
(b) la répétition de la détermination précédente pour au moins un nombre prédéterminé de la pluralité des points caractéristiques de la courbe caractéristique d'impédance de base,
(c) la détermination de la fréquence de la position d'un point caractéristique respectif par une mesure actuelle dans chaque plage de fréquence environnante, et
(d) la détermination des caractéristiques du milieu (3) à partir de la fréquence de la position des points caractéristiques respectifs selon (c) à partir de la mesure actuelle en relation avec des valeurs de référence enregistrées auparavant et la génération d'un signal de résultat par rapport aux caractéristiques du milieu (3),
et dans lequel
(e) les points caractéristiques (P1 à P4) sont prévus sous forme de points de mesure discrets à des fréquences prédéterminées à l'intérieur de la plage de fréquence, et
(f) les plages de fréquence environnantes respectives sont déterminées en tant que plage de fréquence prédéterminée inférieure ou supérieure à la fréquence du point caractéristique (P1 à P4) respectif de la courbe caractéristique d'impédance de base.

2. Appareil selon la revendication 1, dans lequel le dispositif capteur (4) présente des plaques de condensateur (11), entre lesquelles se trouve une partie du milieu (3), et le dispositif capteur (4) est prévu pour la détection de l'impédance complexe Z du milieu dans la plage de fréquence prédéterminée.

3. Appareil selon la revendication 2, dans lequel le milieu (3) est utilisé dans un déroulement de processus et le dispositif de commande (5) est prévu pour amener le signal de résultat à une unité de commande (7) externe pouvant être raccordée au dispositif de commande afin d'influencer le déroulement du processus.

4. Appareil selon l'une quelconque des revendications 1 à 3, dans lequel le dispositif d'actionnement (6) est prévu pour appliquer un signal de tension avec la plage de fréquence prédéterminée au dispositif capteur (4).

5. Appareil selon l'une quelconque des revendications 1 à 4, dans lequel le dispositif de commande (5) présente un premier bloc (12), qui est prévu pour la détermination de fréquences individuelles (ωn), auxquelles les points caractéristiques (P1 à P4) respectifs du tracé d'impédance sont affectés.

6. Appareil selon la revendication 5, dans lequel le dispositif de commande (5) présente un deuxième bloc (13), qui est prévu pour le traitement de l'impédance (Zn) respective des points caractéristiques et la génération du signal de résultat (14).

7. Appareil selon la revendication 6, dans lequel le deuxième bloc (13) du dispositif de commande (5) est prévu en outre pour le traitement seulement des impédances (Zn) des points caractéristiques (P1 à P4) et l'affectation des caractéristiques de matériaux respectives du milieu (3) aux points caractéristiques (P1 à P4).

8. Appareil selon la revendication 7, dans lequel le deuxième bloc (13) du dispositif de commande (5) est prévu en outre pour procéder à l'affectation des caractéristiques de matériaux respectives du milieu (3) aux points caractéristiques (P1 à P4) en fonction de valeurs de référence enregistrées auparavant.

9. Appareil selon l'une quelconque des revendications 2 à 8, dans lequel les plaques de condensateur (11 ; 11a, 11b) sont prévues par paire pour le dispositif capteur (4) et consistent en un matériau conducteur, et dans lequel au moins deux paires de plaques sont prévues, desquelles une paire de plaques présente des plaques de condensateur, qui sont dotées d'une couche isolante.

10. Procédé de détection des caractéristiques de matériaux d'un milieu sur la base d'une courbe caractéristique d'impédance de base détectée auparavant dans une plage de fréquence prédéterminée pour le milieu (3) comprenant une pluralité de points caractéristiques (P1 à P4),
avec les étapes de :
(a) détermination d'une plage de fréquence environnante respective de la courbe caractéristique d'impédance de base autour d'un point respectif parmi les points caractéristiques,
(b) répétition de l'étape de détermination précédente pour au moins un nombre prédéterminé de la pluralité des points caractéristiques de la courbe caractéristique d'impédance de base,
(c) détermination de la fréquence de la position d'un point caractéristique respectif par une mesure actuelle dans chaque plage de fréquence environnante, et
(d) détermination des caractéristiques du milieu (3) à partir de la fréquence de la position des points caractéristiques respectifs selon l'étape (c) à partir de la mesure actuelle en relation avec des valeurs de référence enregistrées auparavant et génération d'un signal de résultat par rapport aux caractéristiques du milieu (3),
dans lequel
(e) les points caractéristiques (P1 à P4) sont prévus sous forme de points de mesure discrets à des fréquences prédéterminées à l'intérieur de la plage de fréquence, et
(f) les plages de fréquence environnantes respectives sont déterminées en tant que plage de fréquence prédéterminée inférieure ou supérieure à la fréquence du point caractéristique (P1 à P4) respectif de la courbe caractéristique d'impédance de base.

11. Procédé selon la revendication 10, dans lequel la détermination de la position des points caractéristiques respectifs se fait avec une mesure actuelle suivant l'étape (c) au moyen d'un algorithme.

12. Procédé selon la revendication 10 ou 11, dans lequel la courbe caractéristique d'impédance de base est déterminée sur l'ensemble de la plage de fréquence et enregistrée en tant qu'information de référence, et les caractéristiques du milieu (3) concerné sont déterminées à partir d'une comparaison des valeurs actuellement mesurées à l'intérieur des plages de fréquence environnantes autour des points caractéristiques respectifs avec les valeurs enregistrées.
